# NEUE EUROPÄISCHE PATENTSCHRIFT

(11) **EP 2 080 585 B2**
(45) Veröffentlichungstag und Bekanntmachung des Hinweises auf die Entscheidung über den Einspruch: **09.04.2014**
(45) Hinweis auf die Patenterteilung: 07.09.2011
(21) Anmeldenummer: 09000328.6
(22) Anmeldetag: 13.01.2009
(51) Int. Cl.: B23Q 17/24

(54) **Überwachungsvorrichtung**
Monitoring device
Dispositif de surveillance

(30) Priorität: 18.01.2008 DE 102008005034
(43) Veröffentlichungstag der Anmeldung: 22.07.2009
(73) Patentinhaber: Andreas Maier GmbH & Co. KG, 70734 Fellbach (DE)
(72) Erfinder: Göbel, Volker, 70563 Stuttgart (DE)
(74) Vertreter: Hoeger, Stellrecht & Partner Patentanwälte

(56) Entgegenhaltungen:
- EP-A- 1 277 542
- WO-A-2007/104438
- DE-A1-102005 016 791
- DE-A1-102005 060 606
- DE-U1-202005 015 438
- JP-A- 58 192 736
- JP-A- 62 097 797
- US-A1- 2008 239 326

## Beschreibung

Die vorliegende Erfindung betrifft eine Werkstückbearbeitungsanlage, umfassend
mindestens eine Überwachungsvorrichtung zur Überwachung der Orientierung mindestens einer Spannvorrichtung zum Einspannen mindestens eines Werkstücks an mindestens einer Werkstückaufnahmevorrichtung und
mindestens eine Spannvorrichtung zum Einspannen mindestens eines Werkstücks an mindestens einer Werkstückaufnahmevorrichtung.

Solche Werkstückbearbeitungsanlagen mit Überwachungsvorrichtungen, insbesondere zur Automatisierung in der Werkstückspanntechnik, sind aus dem Stand der Technik bekannt.

Die Überwachung erfolgt bei den bekannten Überwachungsvorrichtungen mittels Sperrluft oder elektronischer Sensoren, wobei eine umfangreiche Überwachung komplexer Systeme stets eine Vielzahl von Sensoren erfordert, die für jeden Betriebsmodus des zu überwachenden Systems aufwendig justiert werden müssen.

Die DE 10 2005 016 791 A1 offenbart eine Überprüfungsvorrichtung zum Überprüfen der Qualität von Werkzeugschneiden von Werkzeugen mittels einer Bilderzeugungsvorrichtung und einer Bildauswertungsvorrichtung. Die Überprüfungsvorrichtung umfasst dabei eine als Spindel ausgebildete Spannvorrichtung, in welcher die zu überprüfenden Werkzeuge angeordnet werden.

Die DE 20 2005 015 438 U1, die JP 62 097797 A, die US 2008/239326 A1, die JP 58 192736 A, die DE 10 2005 060 606 A1 und die EP 1 277 542 A1 offenbaren verschiedene Vorrichtungen zum Erfassen von Positionen unterschiedlicher Werkstücke.

Die WO 2007/104438 A1 offenbart eine Vorrichtung und ein Verfahren zur Ermittlung einer an einem Spannfutter anliegenden Spannkraft mittels eines Deformationssensors.

Der vorliegenden Erfindung liegt die Aufgabe zugrunde, eine Werkstückbearbeitungsanlage der eingangs genannten Art zu schaffen, bei welcher auf besonders flexible Art und Weise mittels der Überwachungsvorrichtung eine umfassende Überwachung möglich ist.

Diese Aufgabe wird bei der eingangs genannten Werkstückbearbeitungsanlage erfindungsgemäß durch die Merkmale von Anspruch 1 gelöst.

Die erfindungsgemäße Lösung bietet den Vorteil, dass eine Umstellung einer Anlage, welche beispielsweise eine Werkstückbearbeitungsvorrichtung umfasst, auf einen anderen Betriebsmodus, in dem beispielsweise eine neue Art von Werkstücken an der Werkstückbearbeitungsvorrichtung bearbeitet wird, besonders einfach durchführbar ist.

Nach einer Weiterbildung der Erfindung ist eine Verbindung der Überwachungsvorrichtung mit einer die zu überwachenden Objekte bearbeitenden oder umfassenden Werkstückbearbeitungsvorrichtung vorgesehen. Damit kann auf die Werkstückbearbeitungsvorrichtung, in Abhängigkeit von einer mittels mindestens einer Auswertungsvorrichtung durchgeführten Auswertung, automatisch Einfluss genommen werden. Insbesondere kann die Werkstückbearbeitungsvorrichtung in Abhängigkeit von einem Ausgangssignal der Auswertungsvorrichtung von einer Maschinensteuerungsvorrichtung angesteuert werden.

Mittels der Überwachungsvorrichtung sind Objekte ferner vorzugsweise hinsichtlich ihrer Art und/oder ihrer Position überwachbar.

Unter einer "Überwachung der Art" (Identifikation) ist in dieser Beschreibung und in den beigefügten Ansprüchen zu verstehen, dass unterschiedliche Gruppen von überwachten Objekten mittels der Überwachungsvorrichtung unterscheidbar sind. Insbesondere ist ermittelbar, ob der Typ des beispielsweise an der Werkstückaufnahmevorrichtung gehaltenen Werkstücks demjenigen entspricht, welcher zur Bearbeitung mittels der Werkstückbearbeitungsvorrichtung vorgesehen ist.

Unter einer "Überwachung der Position" ist in dieser Beschreibung und in den beigefügten Ansprüchen zu verstehen, dass die Abweichung einer Istposition eines überwachten Objekts von seiner Sollposition, insbesondere von der in einem Sollbild oder in einem CAD-Modell vorgegebenen Sollposition, ermittelbar ist.

Eine "Istposition" ist dabei die Position, in der sich ein Objekt zum Zeitpunkt einer Erzeugung eines Bildes dieses Objekts befindet, das heißt, dass der Begriff "Istposition" die mittels einer Bilderzeugungsvorrichtung in einem Bild festgehaltene Position eines Objekts bezeichnet.

Der Begriff "Sollposition" bezieht sich dagegen auf die gewünschte Position des Objekts, in der es sich im jeweiligen Fall befinden soll. Insbesondere ist unter einer "Sollposition" eine Referenzposition zu verstehen, das heißt eine Position, in der ein als Referenz definiertes Objekt bei ordnungsgemäßer Durchführung vordefinierter Schritte aufzufinden sein soll.

Eine mittels mindestens einer Bildauswertungsvorrichtung durchgeführte Auswertung erfolgt vorzugsweise unter Verwendung mindestens eines Toleranzwertes, wobei innerhalb des vorgegebenen mindestens einen Toleranzwerts eine Abweichung der Istposition des überwachten Objekts von seiner Sollposition noch immer als Übereinstimmung der Istposition mit der Sollposition gewertet werden kann. Derartige Toleranzwerte tragen der Tatsache Rechnung, dass in realen Systemen oft detektierbare Abweichungen auftreten. Da es wünschenswert sein kann, kleinere Abweichungen zu tolerieren, stellt die Verwendung eines Toleranzwertes ein adäquates Mittel zur Vermeidung zu hoher Prozessabbruchquoten unter gleichzeitiger Einhaltung der gewünschten Qualitätskriterien dar.

Nach einer Weiterbildung der Erfindung ist vorgesehen, dass die Absolutkoordinaten mindestens eines überwachten Objekts bezüglich eines vorgegebenen Koordinatensystems ermittelbar sind.

Besonders vorteilhaft ist die Ermittlung von Absolutkoordinaten bei der Verwendung einer Vielzahl von Bilderzeugungsvorrichtungen, da dann die Position jedes von mindestens einer Bilderzeugungsvorrichtung erfassten Objekts relativ zu der gesamten Anlage ermittelbar ist.

Unter einer "Überwachung der Orientierung" ist in dieser Beschreibung und in den beigefügten Ansprüchen die Überwachung der räumlichen Ausrichtung des überwachten Objekts, insbesondere bezüglich einer Drehachse, zu verstehen.

Vorzugsweise ist mittels der Überwachungsvorrichtung folglich ermittelbar, ob ein überwachtes Objekt bezüglich seiner Sollausrichtung gedreht, insbesondere um 180° um eine vertikale Achse gedreht, angeordnet ist.

Bei einer bevorzugten Ausgestaltung der Erfindung sind die Merkmale Art, Position und Orientierung eines überwachten Objekts nicht nur zusammen, sondern auch einzeln, insbesondere jedoch in beliebiger Kombination miteinander, überwachbar.

Vorzugsweise sind ferner unterschiedliche Objekte, insbesondere gleichzeitig, bezüglich unterschiedlicher Merkmale überwachbar. Beispielsweise kann vorgesehen sein, eine Werkstückaufnahmevorrichtung auf deren Position und gleichzeitig ein an der Werkstückaufnahmevorrichtung angeordnetes Werkstück auf dessen Art und/oder dessen Orientierung zu überwachen.

Einerseits ist es günstig, wenn mindestens eine Bilderzeugungsvorrichtung unbeweglich ausgebildet ist. Dies hat den Vorteil einer besonders einfachen Montage.

Andererseits kann es vorteilhaft sein, wenn mindestens eine Bilderzeugungsvorrichtung beweglich, insbesondere an einer Führungseinrichtung geführt verfahrbar, ausgebildet ist. Auf diese Art und Weise ist ein bewegtes Objekt fortlaufend überwachbar.

Eine vorteilhafte Ausgestaltung der Erfindung sieht vor, dass mindestens eine Bilderzeugungsvorrichtung mindestens ein abbildendes optisches System, insbesondere ein Objektiv, und mindestens einen Bildwandler, insbesondere einen CCD-Chip, umfasst.

Um die Lichtverhältnisse für die Bilderzeugung zu verbessern, weist die Überwachungsvorrichtung vorzugsweise mindestens eine Beleuchtungsvorrichtung auf.

Eine vorteilhafte Ausgestaltung der Erfindung sieht vor, dass mindestens eine Beleuchtungsvorrichtung mindestens einen Laser umfasst.

Alternativ oder ergänzend hierzu kann vorgesehen sein, dass mindestens eine Beleuchtungsvorrichtung mindestens eine Beleuchtungseinheit aufweist, die mindestens eine Leuchtdiode umfasst.

Insbesondere zur Identifikation der Objekte ist es besonders vorteilhaft, wenn mittels mindestens einer Beleuchtungseinheit ein Muster, insbesondere ein linienartiges, ein streifenartiges und/oder ein gitterartiges Muster, auf mindestens einen von mindestens einer Bilderzeugungsvorrichtung erfassten Bereich projizierbar ist.

Bei einer vorteilhaften Ausgestaltung umfasst mindestens ein von mindestens einer Bilderzeugungsvorrichtung erfasster Bereich mindestens eine Werkstückaufnahmevorrichtung und vorzugsweise mindestens ein Werkstück, wobei die Werkstückaufnahmevorrichtung und gegebenenfalls auch das mindestens eine Werkstück in einer Werkstückbearbeitungsposition zur Bearbeitung des mindestens einen Werkstücks angeordnet sind. Auf diese Weise ist das Werkstück, wie auch die Werkstückaufnahmevorrichtung, vor, während und nach dem Bearbeitungsvorgang überwachbar.

Vorteilhaft ist es, wenn an mindestens einem Werkstück, an mindestens einer Werkstückaufnahmevorrichtung und/oder an mindestens einer Spannvorrichtung mindestens eine Detektionshilfe zur Vereinfachung einer mittels mindestens einer Bildauswertungsvorrichtung durchgeführten Auswertung eines Bildes, welches mittels mindestens einer Bilderzeugungsvorrichtung von dem mindestens einen Werkstück, der mindestens einen Werkstückaufnahmevorrichtung und/oder der mindestens einen Spannvorrichtung erzeugt wird, angeordnet ist.

Nach einer weiteren vorteilhaften Ausführungsform der Erfindung ist mittels mindestens einer Bilderzeugungsvorrichtung mindestens ein Sollbild erzeugbar, welches mindestens ein Werkstück, mindestens eine Werkstückaufnahmevorrichtung und/oder mindestens eine Spannvorrichtung zeigt. Damit kann auf einfache Art und Weise eine Referenz für die zu überwachenden Objekte festgelegt werden.

Es hat sich als günstig erwiesen, wenn mindestens ein Sollbild erzeugbar ist, welches ein Werkstück, eine Werkstückaufnahmevorrichtung und eine Spannvorrichtung, umfassend mehrere, beispielsweise vier, Spannelemente, zeigt.

Vorteilhaft ist es ferner, wenn mindestens ein Sollbild mindestens ein zumindest teilweise abgebildetes Objekt in seiner Sollart, Sollposition und/oder Sollorientierung zeigt, wobei mittels mindestens einer Bildauswertungsvorrichtung eine Bildauswertung durchführbar ist, bei der mindestens ein Sollbild mit mindestens einem Istbild verglichen wird.

Nach einer Weiterbildung der Erfindung kann vorgesehen sein, dass mindestens eine mittels mindestens einer Bildauswertungsvorrichtung durchgeführte Bildauswertung auf einem Vergleich der Kontrast- und/oder Helligkeitswerte des mindestens einen Istbildes mit denjenigen des entsprechenden Sollbildes beruht.

Vorzugsweise ist eine Abweichung der Istposition mindestens eines Teils der Werkstückbearbeitungsvorrichtung von der entsprechenden Sollposition bereits dann detektierbar, wenn dieser mindestens eine Teil von mindestens einer Bilderzeugungsvorrichtung zumindest teilweise erfasst wird.

Bei einer Ausführungsform der Erfindung kann vorgesehen sein, dass mittels mindestens einer Messvorrichtung eine Größe ermittelbar ist, von der die durch mindestens eine Spannvorrichtung auf mindestens ein Werkstück ausgeübte Spannkraft abhängt.

Die mittels mindestens einer Messvorrichtung ermittelbare Größe kann beispielsweise der durch mindestens eine Spannvorrichtung auf mindestens ein Werkstück ausgeübte Spanndruck sein.

Die mittels mindestens einer Messvorrichtung ermittelbare Größe kann aber auch eine elektrische Größe, insbesondere ein elektrischer Strom, sein. Beispielsweise in der Magnetspanntechnik kann so ermittelt werden, wie groß die mittels mindestens einer magnetischen Spannvorrichtung auf mindestens ein Werkstück ausgeübte Spannkraft ist.

Einerseits kann vorgesehen sein, dass eine Messvorrichtung mit der Überwachungsvorrichtung verbunden ist, um so direkt Signale von der Messvorrichtung zur Überwachungsvorrichtung zu übermitteln.

Andererseits kann es von Vorteil sein, wenn mindestens eine Bilderzeugungsvorrichtung der Überwachungsvorrichtung mindestens eine Anzeige einer Messvorrichtung erfasst. Dies ist insbesondere dann eine bevorzugte Ausgestaltung der Erfindung, wenn eine Überwachungsvorrichtung an einer die Messvorrichtung umfassenden Werkstückbearbeitungsvorrichtung angeordnet ist, welche keine Schnittstelle zur Datenübertragung von der Messvorrichtung zu der Überwachungsvorrichtung aufweist.

Bei einer Ausführungsform der Erfindung kann vorgesehen sein, dass die Überwachungsvorrichtung mindestens eine Schnittstelle zur Übertragung von Signalen zu mindestens einer Maschinensteuerungsvorrichtung umfasst.

Nach einer vorteilhaften Ausführungsform der Erfindung kann vorgesehen sein, dass mittels mindestens einer Schnittstelle von der mindestens einen Messvorrichtung mindestens ein Signal an mindestens eine Auswertungsvorrichtung und/oder mindestens ein Signal an mindestens eine Maschinensteuerungsvorrichtung übertragbar ist, wobei, basierend auf dem mindestens einen Signal, mindestens eine Funktion der Werkstückbearbeitungsvorrichtung freischaltbar oder sperrbar ist.

Ferner kann bei einer Ausgestaltung der Erfindung vorgesehen sein, dass von mindestens einer Bildauswertungsvorrichtung über mindestens eine Schnittstelle mindestens ein Signal an mindestens eine Maschinensteuerungsvorrichtung übertragbar ist, wobei, basierend auf dem mindestens einen Signal, mindestens eine Funktion der Werkstückbearbeitungsvorrichtung freischaltbar oder sperrbar ist.

Vorteilhaft ist es, wenn eine freischaltbare Funktion die Bearbeitung des Werkstücks ist.

Ferner kann es vorteilhaft sein, wenn die freischaltbare Funktion die Zuführung mindestens einer mindestens ein Werkstück aufnehmenden Werkstückaufnahmevorrichtung zu der Werkstückbearbeitungsvorrichtung ist.

Werden von mehreren Bilderzeugungsvorrichtungen mehrere Bilder von einem oder mehreren zu überwachenden Objekten im wesentlichen gleichzeitig erzeugt, so erfolgt die Freischaltung einer Funktion der Werkstückbearbeitungsvorrichtung vorzugsweise erst nach der Auswertung aller im wesentlichen gleichzeitig erzeugten Bilder.

Vorzugsweise umfasst die Überwachungsvorrichtung mindestens zwei Bilderzeugungsvorrichtungen, wobei mittels mindestens zweier Bilderzeugungsvorrichtungen im wesentlichen gleichzeitig Bilder erzeugbar sind.

Eine bevorzugte Ausführungsform der Erfindung sieht vor, dass mittels mindestens einer Bildauswertungsvorrichtung eine auf dem Triangulationsprinzip beruhende Bildauswertung durchführbar ist, wobei mindestens zwei Bilderzeugungsvorrichtungen aus unterschiedlichen Blickwinkeln zwei einander überschneidende Bereiche erfassen, die mindestens ein Werkstück, mindestens eine Werkstückaufnahmevorrichtung und/oder mindestens eine Spannvorrichtung mit mindestens einem mittels mindestens einer Beleuchtungsvorrichtung darauf projizierten Muster umfassen, wobei aus den erzeugten Bildern mittels mindestens einer Bildauswertungsvorrichtung ein Modell generiert wird, welches die dreidimensionale Struktur der erfassten Bereiche, einschließlich des mindestens einen Werkstücks, der mindestens einen Werkstückaufnahmevorrichtung und/oder der mindestens einen Spannvorrichtung, wiedergibt, und wobei das so generierte dreidimensionale Istmodell zur Ermittlung von Abweichungen mit einem dreidimensionalen Sollmodell verglichen wird.

Nach einer vorteilhaften Ausgestaltung der Erfindung kann vorgesehen sein, dass das generierte dreidimensionale Istmodell zur Ermittlung von Abweichungen mit einem dreidimensionalen CAD-Modell verglichen wird.

Vorzugsweise benötigen die Bilderzeugung und die Bildauswertung des erzeugten Bildes höchstens eine Sekunde.

Bei einer vorteilhaften Ausgestaltung der Erfindung werden mehrere Bilder vorzugsweise gleichzeitig erzeugt und anschließend vorzugsweise gleichzeitig ausgewertet. Die Gesamtdauer der Bilderzeugung und der Bildauswertung erhöht sich folglich im wesentlichen nicht mit der Anzahl der zu erzeugenden und auszuwertenden Bilder.

Nach einer Weiterbildung der Erfindung umfasst mindestens ein von mindestens einer Bilderzeugungsvorrichtung erfasster Bereich mindestens einen Wechseltisch und/oder mindestens einen Rüstplatz zumindest teilweise.

Unter einem "Wechseltisch" ist in der Beschreibung und den beigefügten Ansprüchen eine Vorrichtung zu verstehen, welche der Entnahme mindestens eines bereits bearbeiteten Werkstücks von mindestens einer Werkstückaufnahmevorrichtung und der Anordnung mindestens eines unbearbeiteten Werkstücks an mindestens einer Werkstückaufnahmevorrichtung und/oder dem Austausch der gesamten Werkstückaufnahmevorrichtung einschließlich des an der Werkstückaufnahmevorrichtung angeordneten mindestens einen Werkstücks und der gegebenenfalls mindestens einen an der Werkstückaufnahmevorrichtung angeordneten Spannvorrichtung dient.

Unter einem "Rüstplatz" ist in der Beschreibung und in den beigefügten Ansprüchen eine Vorrichtung zu verstehen, die der Vorbereitung mindestens einer Werkstückaufnahmevorrichtung zur Aufnahme einer bestimmten Gruppe von Werkstücken dient.

Insbesondere ist ein Rüstplatz eine Vorrichtung, die der Anordnung mindestens einer Spannvorrichtung an mindestens einer Werkstückaufnahmevorrichtung dient, wobei die mindestens eine Spannvorrichtung derart angeordnet wird, dass einzelne Werkstücke einer bestimmten Gruppe von Werkstücken an der Werkstückaufnahmevorrichtung eingespannt und nach einer Bearbeitung des Werkstücks mittels der Werkstückbearbeitungsvorrichtung von der Werkstückaufnahmevorrichtung entfernt werden können.

Vorteilhafterweise kann vorgesehen sein, dass mindestens ein Werkstück, mindestens eine Spannvorrichtung und/oder mindestens eine Werkstückaufnahmevorrichtung an mindestens einem Rüstplatz für die Verwendung in oder an einer Werkstückbearbeitungsvorrichtung vorbereitet, insbesondere umgerüstet, ausgetauscht, gereinigt, zerlegt und/oder zusammengebaut wird.

Bei einer vorteilhaften Ausgestaltung der erfindungsgemäßen Überwachungsvorrichtung ist mindestens eine Bilderzeugungsvorrichtung derart angeordnet, dass vor einem Einbringen der mindestens einen Werkstückaufnahmevorrichtung in einen Bearbeitungsraum, in dem die Werkstückbearbeitungsvorrichtung angeordnet ist, mittels der mindestens einen Bilderzeugungsvorrichtung mindestens ein Bild eines Bereichs erzeugbar ist, welcher das mindestens eine Werkstück, die mindestens eine Werkstückaufnahmevorrichtung und/oder die mindestens eine Spannvorrichtung zumindest teilweise umfasst.

Besonders vorteilhaft ist es, wenn mindestens eine Bilderzeugungsvorrichtung oberhalb der Werkstückbearbeitungsvorrichtung, insbesondere an einer Deckenwand eines Bearbeitungsraumes, angeordnet ist. Auf diese Weise ist ein besonders großer Bereich mittels der mindestens einen Bilderzeugungsvorrichtung erfassbar.

Vorzugsweise umfasst mindestens ein von mindestens einer Bilderzeugungsvorrichtung erfasster Bereich eine Palettenlagervorrichtung zumindest teilweise.

Unter einer "Palettenlagervorrichtung" ist eine Vorrichtung zur Lagerung von Paletten zu verstehen. Insbesondere können an den Paletten Werkstücke und/oder Werkstückaufnahmevorrichtungen, vorzugsweise einschließlich der daran eingespannten Werkstücke, angeordnet sein.

Bei einer vorteilhaften Ausgestaltung der Erfindung ermöglicht die zumindest teilweise Erfassung einer Palettenlagervorrichtung mittels mindestens einer Bilderzeugungsvorrichtung die Überwachung der mittels der Werkstückbearbeitungsvorrichtung zu bearbeitenden Werkstücke, bevor diese der Werkstückbearbeitungsvorrichtung zugeführt werden.

Die erfindungsgemäße Werkstückbearbeitungsanlage umfasst neben mindestens einer Überwachungsvorrichtung vorzugsweise
mindestens ein Werkstück, welches mittels mindestens einer Spannvorrichtung an einer Werkstückbearbeitungsvorrichtung oder an mindestens einer Werkstückaufnahmevorrichtung eingespannt ist, und/oder
mindestens eine Werkstückaufnahmevorrichtung, an der das mindestens eine Werkstück gehalten ist.

Nach einer Weiterbildung der Erfindung kann vorgesehen sein, dass der Werkstückbearbeitungsvorrichtung mindestens ein Wechseltisch und/oder mindestens ein Rüstplatz zugeordnet ist.

Es kann ferner vorteilhaft sein, wenn der Werkstückbearbeitungsvorrichtung mindestens eine Palettenlagervorrichtung zugeordnet ist.

Besonders vorteilhaft ist es, wenn die Werkstückbearbeitungsanlage mindestens eine Werkstückbearbeitungsvorrichtung, mindestens einen Wechseltisch und/oder mindestens einen Rüstplatz und/oder mindestens eine Palettenlagervorrichtung umfasst.

Eine vorteilhafte Ausführungsform der Erfindung sieht vor, dass mindestens eine Werkstückaufnahmevorrichtung an mindestens einer Führungseinrichtung geführt verfahrbar ausgebildet ist.

Eine besonders bevorzugte Ausgestaltung der Erfindung sieht vor, dass mindestens eine Werkstückaufnahmevorrichtung mittels mindestens einer Führungseinrichtung mindestens zweidimensional verfahrbar, insbesondere dreidimensional verfahrbar, ausgebildet ist.

Nach einer weiteren vorteilhaften Ausführungsform der Erfindung ist mindestens eine Werkstückaufnahmevorrichtung mittels mindestens einer als Drehteller ausgebildeten Führungseinrichtung verfahrbar ausgebildet.

Es ist vorgesehen, dass die mindestens eine Spannvorrichtung mindestens ein Spannelement umfasst, wobei mindestens ein Werkstück zwischen das mindestens eine Spannelement und mindestens eine an der Werkstückaufnahmevorrichtung angeordnete Auflagefläche für das mindestens eine Werkstück spannbar ist.

Insbesondere ist vorgesehen, dass mindestens ein Werkstück zwischen mindestens ein das Werkstück übergreifendes Spannteil eines Spannelements der Spannvorrichtung und mindestens eine an der Werkstückaufnahmevorrichtung angeordnete Auflagefläche für das mindestens eine Werkstück spannbar ist und mittels der Überwachungsvorrichtung ermittelbar ist, ob das mindestens eine das Werkstück übergreifende Spannteil des Spannelements der Spannvorrichtung eine einer Vorgabe entsprechende Orientierung aufweist.

Nach einer vorteilhaften Ausgestaltung der Erfindung weist die mindestens eine Spannvorrichtung mindestens vier Spannelemente zum Einspannen mindestens eines Werkstücks auf.

Die vorliegende Erfindung betrifft ferner ein Verfahren zur Überwachung der Orientierung mindestens einer Spannvorrichtung zum Einspannen mindestens eines Werkstücks an mindestens einer Werkstückaufnahmevorrichtung.

Der vorliegenden Erfindung liegt die Aufgabe zugrunde, ein solches Verfahren zu schaffen, welches auf flexible Art und Weise eine umfassende Überwachung auch komplexer Systeme ermöglicht.

Diese Aufgabe wird bei dem vorstehend genannten Verfahren erfindungsgemäß durch die Merkmale von Anspruch 11 gelöst.

Die Merkmale und Vorteile besonderer Ausgestaltungen des erfindungsgemäßen Verfahrens wurden bereits vorstehend im Zusammenhang mit den besonderen Ausgestaltungen der erfindungsgemäßen Werkstückbearbeitungsanlage erläutert.

Die erfindungsgemäße Werkstückbearbeitungsanlage eignet sich Insbesondere zur Durchführung des erfindungsgemäßen Verfahrens.

Die vorliegende Erfindung kann den Vorteil bieten, dass von einem Gesamtsystem, bestehend aus einer Bilderzeugungsvorrichtung, insbesondere einer Kamera, einer Bildauswertungsvorrichtung, insbesondere einer Elektronikeinheit mit Auswertesoftware, sowie einer Schnittstelle, standardisierte Funktionen an jedwede Maschinensteuerung weitergegeben werden können.

Vorzugsweise bietet das Gesamtsystem folgende Abfragemöglichkeiten:
- Erkennung, ob eine Maschinenpalette eingefahren ist oder nicht und ob sich diese am korrekten Platz befindet;
- Erkennung des Werkstücks, das heißt Erkennung, ob das richtige Werkstück eingelegt ist oder nicht;
- Erkennung der Lage des Werkstücks, das heißt Erkennung, ob das Werkstück richtig ausgerichtet und/oder in der korrekten Position in der Vorrichtung liegt;
- Erkennung der Anwesenheit des Werkstücks, das heißt Erkennung, ob das Werkstück überhaupt vorhanden ist und/oder ob es exakt an der richtigen Position liegt, so dass die Maschinenfunktion freigegeben werden kann;
- Erkennung der Position der Spannelemente, das heißt Erkennung, ob sich alle Spannelemente in gespanntem Zustand befinden.

Vorzugsweise können alle im Erkennungsfeld einer Bilderzeugungsvorrichtung befindlichen Parameter mit einem Referenzbild verglichen werden. Nach einer besonders vorteilhaften Ausgestaltung der Erfindung wertet eine Software dabei verschiedene Bereiche des Bildausschnittes aus und bietet ein Signal für jede einzelne Funktion.

Eine Bilderzeugungsvorrichtung ist vorzugsweise an folgenden Positionen angeordnet:
- in einem Maschineninnenraum, vorteilhafterweise an der Decke innen im Maschinenraum, um die gesamte Maschinenpalette inklusive Werkstücke zu erfassen;
- außerhalb eines Bearbeitungsraumes mit Erfassung des Maschineninnenraumes zum Schutz der Bilderzeugungsvorrichtung;
- außerhalb eines Bearbeitungsraumes über einem Wechseltisch, so dass schon vor dem Einschwenken in den Bearbeitungsraum die Erfassung und Überprüfung erfolgen kann;
- komplett außerhalb der Maschine auf einem Rüstplatz;
- komplett außerhalb der Maschine in einer Lagervorrichtung gleich welcher Art.

Nach einer vorteilhaften Ausgestaltung der Erfindung kann ein "in Ordnung"-Signal, welches eine Software für jede einzelne Funktion bietet, über eine Schnittstelle an eine Maschinensteuerungsvorrichtung übergeben werden. Die Signale werden in der Maschine in der existierenden Steuerung aufgenommen.

Es können dort Abhängigkeiten gebildet werden, wann die Maschine die Freigabe für die Bearbeitung bekommt.

Vorzugsweise werden die Merkmale von Bauteilen mit Hilfe einer Beleuchtung durch Laserlinien oder LED-Strahler erkennbar gemacht, um sie anschließend mit Bildbearbeitungssystemen zu erfassen und auszuwerten. Insbesondere werden die geometrischen Daten der Bauteile normiert und als Vergleichswerte mit einem Masterteil (Referenzteil) angezeigt, bewertet und archiviert.

Die Bildauswertung erfolgt vorzugsweise mit Subpixelgenauigkeit, womit Messgenauigkeiten von einem Zehntausendstel der beobachteten Objektgröße erzielt werden.

Vorteilhaft ist es, wenn nach allgemeinen geometrischen Mustern, insbesondere einem Eck, einem Kreis und/oder einem Kreuz, oder nach einem Muster, das von einem "Golden Sample" (Referenzteil) eingelernt wurde, gesucht wird.

Nach einer bevorzugten Ausgestaltung der Erfindung wird zum Beispiel eine Vorrichtung vor die Bilderzeugungsvorrichtung gefahren und ein Muster an einem Spannelement gelernt. Bei allen weiteren Spannelementen wird von der Bildverarbeitung automatisch nach diesem Muster gesucht und die Position im Bild gemessen.

Alternativ oder ergänzend hierzu kann eine Messung mit einem 3D-Sensor vorgesehen sein. Dieser besteht aus einer Streifenprojektion und einer hochauflösenden CCD-Kamera. Auf der Vorrichtung befinden sich Referenzpunkte, mit denen der Sensor seine Messdaten in ein globales Koordinatensystem einbinden kann.

Vorzugsweise ermöglicht eine einfache Referenz mit einem Vergleich zwischen einem Sollbild und einem Istbild eine Fehlererkennung ab einer Abweichung von 0,01 cm.

Es hat sich als günstig erwiesen, wenn mindestens eine Detektionshilfe in Form von kreisförmigen Marken, Adaptern oder Markierungen an den interessierenden Stellen auf ein zu überwachendes Objekt aufgeklebt oder in das zu überwachende Objekt eingesetzt ist.

Vorzugsweise kann mittels mindestens einer Messvorrichtung eine Druckmessung erfolgen.

Es kann aber auch vorteilhaft sein, wenn mindestens eine Messvorrichtung als Messvorrichtung zur Messung elektrischer Signale aus der Magnetspanntechnik ausgebildet ist.

Weitere Merkmale und Vorteile der Erfindung sind Gegenstand der nachfolgenden Beschreibung und der zeichnerischen Darstellung eines Ausführungsbeispiels.

In den Figuren zeigen:
- Fig. 1: eine schematische perspektivische Darstellung einer Überwachungsvorrichtung, einer Maschinensteuerungsvorrich- tung, einer Werkstückbearbeitungsvorrichtung und eines der Werkstückbearbeitungsvorrichtung zugeordneten Rüstplatzes;
- Fig. 2: eine schematische Seitenansicht einer Werkstückbearbeitungsvor- richtung;
- Fig. 3: eine schematische Draufsicht auf die Oberseite der Werkstück- bearbeitungsvorrichtung aus Fig. 2 mit der Blickrichtung in Rich- tung des Pfeiles 3 in Fig. 2;
- Fig. 4: eine schematische Vorderansicht der Werkstückbearbeitungsvor- richtung aus Fig. 2 mit der Blickrichtung in Richtung des Pfeiles 4 in Fig. 2;
- Fig. 5: eine schematische perspektivische Darstellung einer Paletten- lagervorrichtung;
- Fig. 6a: eine schematische Seitenansicht der Werkstückbearbeitungsvor- richtung aus Fig. 2 mit einer richtig positionierten Palette;
- Fig. 6b: eine der Fig. 6a entsprechende schematische Seitenansicht der Werkstückbearbeitungsvorrichtung aus Fig. 2 mit einer falsch positionierten Palette;
- Fig. 7a: eine schematische Draufsicht auf die Oberseite der Werkstück- bearbeitungsvorrichtung aus Fig. 2 mit einer richtig positionierten Palette;
- Fig. 7b: eine der Fig. 7a entsprechende schematische Draufsicht auf die Oberseite der Werkstückbearbeitungsvorrichtung aus Fig. 2 mit einer falsch positionierten Palette;
- Fig. 8a: eine schematische Seitenansicht der Werkstückbearbeitungsvor- richtung aus Fig. 2 mit einem Werkstück des richtigen Typs;
- Fig. 8b: eine der Fig. 8a entsprechende schematische Seitenansicht der Werkstückbearbeitungsvorrichtung aus Fig. 2 mit einem Werk- stück des falschen Typs;
- Fig. 9a: eine schematische Draufsicht auf die Oberseite der Werkstück- bearbeitungsvorrichtung aus Fig. 2 mit einem Werkstück des richtigen Typs;
- Fig. 9b: eine der Fig. 9a entsprechende schematische Draufsicht auf die Oberseite der Werkstückbearbeitungsvorrichtung aus Fig. 2 mit einem Werkstück des falschen Typs;
- Fig. 10a: eine schematische Seitenansicht der Werkstückbearbeitungsvor- richtung aus Fig. 2 mit einem richtig orientierten Werkstück;
- Fig. 10b: eine der Fig. 10a entsprechende schematische Seitenansicht der Werkstückbearbeitungsvorrichtung aus Fig. 2 mit einem falsch orientierten Werkstück;
- Fig. 11a: eine schematische Draufsicht auf die Oberseite der Werkstück- bearbeitungsvorrichtung aus Fig. 2 mit einem richtig orientierten Werkstück;
- Fig. 11b: eine der Fig. 11a entsprechende schematische Draufsicht auf die Oberseite der Werkstückbearbeitungsvorrichtung aus Fig. 2 mit einem falsch orientierten Werkstück;
- Fig. 12a: eine schematische Seitenansicht der Werkstückbearbeitungsvor- richtung aus Fig. 2 mit einem vorhandenen Werkstück;
- Fig. 12b: eine der Fig. 12a entsprechende schematische Seitenansicht der Werkstückbearbeitungsvorrichtung aus Fig. 2 mit einem fehlen- den Werkstück;
- Fig. 13a: eine schematische Draufsicht auf die Oberseite der Werkstück- bearbeitungsvorrichtung aus Fig. 2 mit einem vorhandenen Werk- stück;
- Fig. 13b: eine der Fig. 13a entsprechende schematische Draufsicht auf die Oberseite der Werkstückbearbeitungsvorrichtung aus Fig. 2 mit einem fehlenden Werkstück;
- Fig. 14a: eine schematische Draufsicht auf die Oberseite der Werkstück- bearbeitungsvorrichtung aus Fig. 2 mit richtig orientierten Spann- elementen;
- Fig. 14b: eine der Fig. 14a entsprechende schematische Draufsicht auf die Oberseite der Werkstückbearbeitungsvorrichtung aus Fig. 2 mit falsch orientierten Spannelementen;
- Fig. 15a: eine schematische Seitenansicht der Werkstückbearbeitungsvor- richtung aus Fig. 2, wobei die Anzeige einen ordnungsgemäßen Spanndruck anzeigt; und
- Fig. 15b: eine der Fig. 15a entsprechende schematische Seitenansicht der Werkstückbearbeitungsvorrichtung aus Fig. 2, wobei die Anzeige einen nicht ordnungsgemäßen Spanndruck anzeigt.

Gleiche oder funktional äquivalente Elemente sind in allen Figuren mit denselben Bezugszeichen versehen.

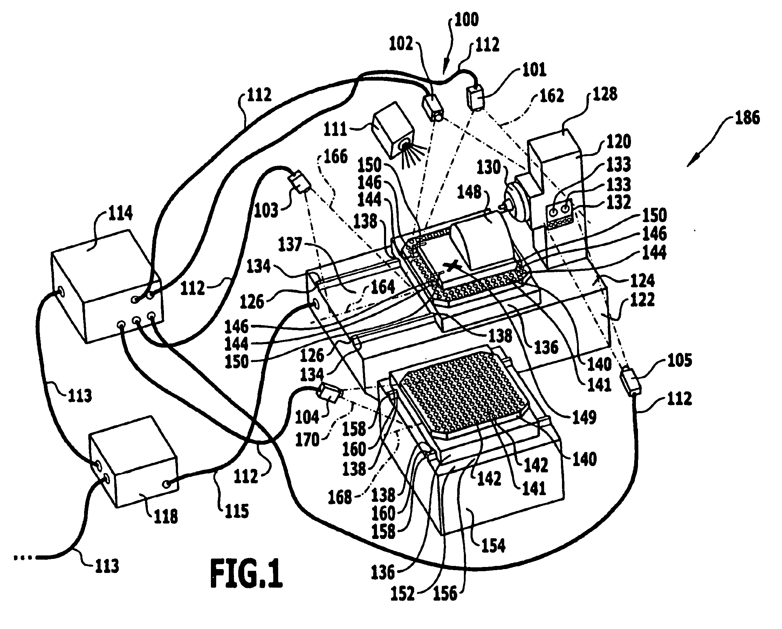

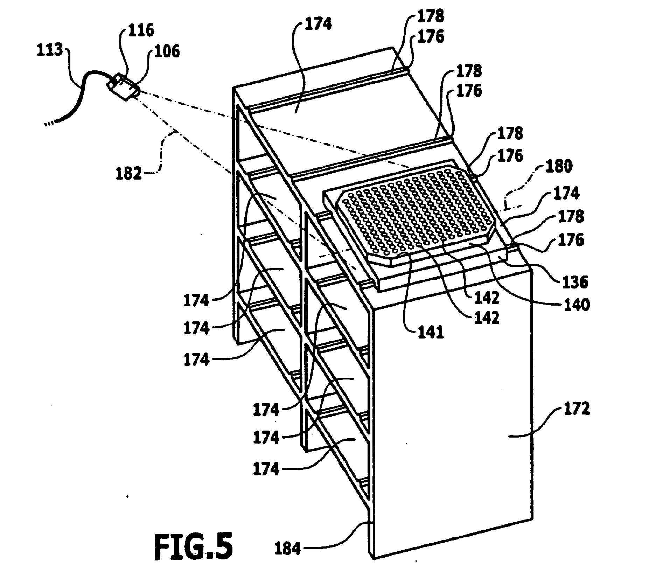

Eine in den Fig. 1 und 5 dargestellte, als Ganzes mit 100 bezeichnete Überwachungsvorrichtung umfasst sechs jeweils als Kamera ausgebildete Bilderzeugungsvorrichtungen: eine erste Kamera 101, eine zweite Kamera 102, eine dritte Kamera 103, eine vierte Kamera 104, eine fünfte Kamera 105 (siehe Fig. 1) und eine sechste Kamera 106 (siehe Fig. 5).

Die erste Kamera 101, die zweite Kamera 102, die dritte Kamera 103, die vierte Kamera 104, die fünfte Kamera 105 und die sechste Kamera 106 umfassen jeweils ein als Objektiv ausgebildetes abbildendes optisches System zur Abbildung des jeweils erfassten Bereichs auf einen beispielsweise als CCD-Chip ausgebildeten (nicht dargestellten) Bildwandler.

Ferner umfasst die Überwachungsvorrichtung 100 eine Beleuchtungsvorrichtung 111.

Die erste Kamera 101, die zweite Kamera 102, die dritte Kamera 103, die vierte Kamera 104 und die fünfte Kamera 105 sind, wie in Fig. 1 dargestellt, mittels Verbindungskabeln 112 mit einer beispielsweise als Computer ausgebildeten gemeinsamen Bildauswertungsvorrichtung 114 verbunden.

Die sechste Kamera 106 weist eine in ihrem Gehäuse angeordnete Bildauswertungsvorrichtung 116 auf, die mittels eines Verbindungskabels 113 mit einer Maschinensteuerungsvorrichtung 118 verbunden ist.

Mittels eines weiteren Verbindungskabels 113 ist die gemeinsame Bildauswertungsvorrichtung 114 der ersten Kamera 101, der zweiten Kamera 102, der dritten Kamera 103, der vierten Kamera 104 und der fünften Kamera 105 mit der Maschinensteuerungsvorrichtung 118 verbunden.

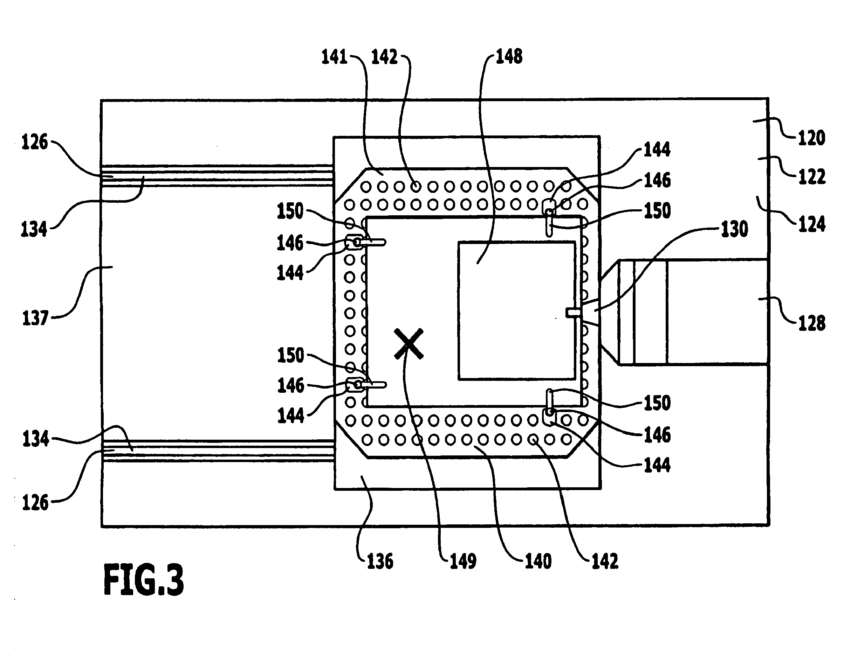

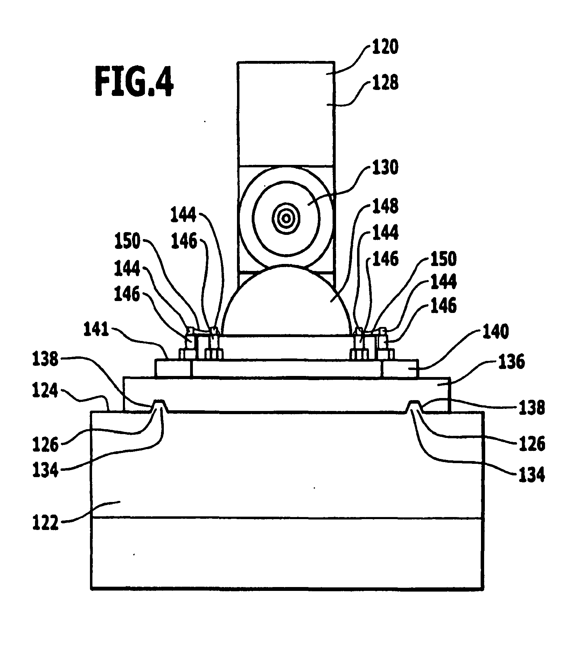

Die Maschinensteuerungsvorrichtung 118 ist mittels eines Verbindungskabels 115 mit einer Werkzeugbearbeitungsvorrichtung 120 verbunden (Fig. 1 bis 4).

Als Schnittstelle zur Datenübertragung mittels der Verbindungskabel 112, 113 und 115 kann beispielsweise eine USB-Schnittstelle oder eine FireWire-Schnittstelle vorgesehen sein.

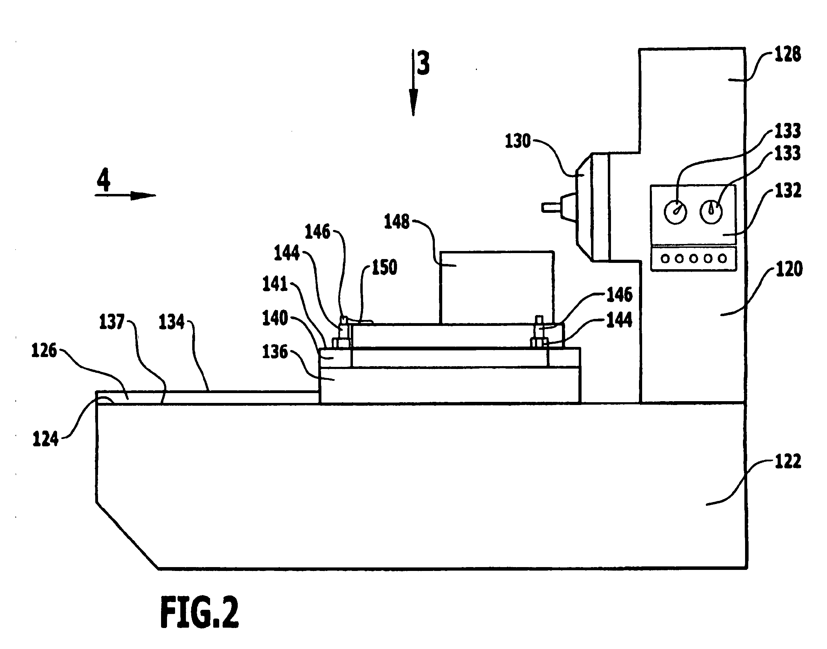

Die in den Fig. 2 bis 4 dargestellte Werkstückbearbeitungsvorrichtung 120 umfasst einen im wesentlichen quaderförmigen Grundkörper 122, auf dessen Oberseite 124 eine Führungseinrichtung 126 und eine neben der Führungseinrichtung 126 angeordnete turmförmige Werkzeugträgervorrichtung 128 angeordnet sind. Die Werkzeugträgervorrichtung 128 ist im wesentlichen quaderförmig und weist auf ihrer zu der Führungseinrichtung 126 zeigenden Seite ein Bearbeitungswerkzeug, beispielsweise eine Fräs- und/oder Bohrvorrichtung 130, und auf einer dieser Seite benachbarten Seite eine in diesem Ausführungsbeispiel als Druckmessvorrichtung ausgebildete Messvorrichtung 132 mit zwei als Spanndruckanzeigen ausgebildeten Anzeigen 133 auf.

Die Führungsvorrichtung 126 weist zwei parallel zueinander verlaufende, im Abstand voneinander angeordnete Führungsschienen 134 auf.

Auf den Führungsschienen 134 ist eine Palette 136 angeordnet, die an ihrer Unterseite zu den Führungsschienen 134 komplementäre Führungsnuten 138 aufweist. Die Palette 136 ist somit entlang den Führungsschienen 134 geführt verfahrbar.

Die Führungsschienen 134 sind so angeordnet, dass die Palette 136 zu der Fräs- und/oder Bohrvorrichtung 130 hin oder von dieser weg verfahrbar ist.

Die Position der Palette 136 an dem der Fräs- und/oder Bohrvorrichtung 130 zugewandten Ende der Führungsschienen 134 wird im folgenden als "Werkstückbearbeitungsposition" bezeichnet.

Der der Fräs- und/oder Bohrvorrichtung 130 gegenüberliegende Teil der Werkstückbearbeitungsvorrichtung 120 ist als Wechseltisch 137 ausgebildet.

Die "Werkstückwechselposition" ist bei diesem Ausführungsbeispiel die Position der Palette 136 an dem der Fräs- und/oder Bohrvorrichtung 130 abgewandten Ende der Führungsschienen 134, das heißt auf dem Wechseltisch 137.

Die Palette 136 ist mittels einer (nicht dargestellten) Bewegungseinrichtung maschinell verfahrbar.

Auf der Palette 136 ist eine Werkstückaufnahmevorrichtung 140 angeordnet. Die Werkstückaufnahmevorrichtung 140 umfasst eine an ihrer Oberseite angeordnete Auflagefläche 141. Die Auflagefläche 141 weist eine Vielzahl von in einem rasterförmigen Muster angeordneten Sacklöchern 142 zur Aufnahme von Befestigungsmitteln einer oder mehrerer Spannvorrichtungen 144 auf.

Die Spannvorrichtungen 144 sind als Spannelemente 146 ausgebildet, die relativ zu den Sacklöchern 142 festgelegt werden können. Ein Werkstück 148 kann mittels mehrerer Spannelemente 146 zwischen die Auflagefläche 141 der Werkzeugaufnahmevorrichtung 140 und das Werkstück 148 übergreifende Spannteile 150 der Spannelemente 146 eingespannt werden.

Zur Vereinfachung der Überwachung ist an dem Werkstück 148 eine Detektionshilfe 149 angeordnet. Die Detektionshilfe 149 ist beispielsweise als kreuzförmige Markierung ausgebildet.

Die an der turmförmigen Vorrichtung 128 angeordnete Messvorrichtung 132 weist eine (in den Zeichnungen nicht dargestellte) Verbindung zu mehreren (ebenfalls in den Zeichnungen nicht dargestellten) Sensoren auf, die in der Werkstückaufnahmevorrichtung 140 angeordnet sind und den Spanndruck messen, welcher mittels der Spannelemente 146 auf das Werkstück 148 ausgeübt wird. Die Anzeigen 133 der Messvorrichtung 132 zeigen diesen Spanndruck an.

Im Abstand von der Werkstückbearbeitungsvorrichtung 120 ist ein Rüstplatz 152 angeordnet. Der Rüstplatz 152 umfasst einen im wesentlichen quaderförmigen Grundkörper 154 mit einer auf dessen Oberseite 156 angebrachten Führungseinrichtung 158. Die Führungseinrichtung 158 umfasst zwei zueinander parallel verlaufende, im Abstand voneinander angeordnete Führungsschienen 160. Diese Führungsschienen 160 sind entsprechend den Führungsschienen 134 ausgebildet, so dass die Palette 136 mit den Führungsnuten 138 sowohl auf den Führungsschienen 134 als auch auf den Führungsschienen 160 geführt verfahrbar ist.

Die "Rüstposition" ist bei diesem Ausführungsbeispiel die Position einer Palette 136, in der sich die Palette 136 befindet, wenn sie an dem Rüstplatz 152 angeordnet ist.

In einer (nicht dargestellten) Variante der Erfindung ist eine Verbindung zwischen den Führungsschienen 134 und den Führungsschienen 160 derart vorgesehen, dass eine Palette 136 direkt von der Rüstposition in die Werkstückbearbeitungsposition und zurück verfahrbar ist. Ein Abnehmen der Palette 136 von den Führungsschienen 160 des Rüstplatzes 152 und ein Aufsetzen der Palette 136 auf die Führungsschienen 134 der Werkstückbearbeitungsvorrichtung 120 ist in einer solchen Ausführungsform nicht notwendig.

Die erste Kamera 101 ist senkrecht oberhalb der Werkzeugbearbeitungsvorrichtung 120 angeordnet, und ihre optische Achse verläuft in einer vertikalen Ebene, so dass die erste Kamera einen Werkstückbearbeitungsbereich 162 erfasst. Der Werkstückbearbeitungsbereich 162 umfasst die Palette 136 in der Werkstückbearbeitungsposition mit der auf der Palette 136 angeordneten Werkstückaufnahmevorrichtung 140, den an der Werkstückaufnahmevorrichtung 140 angeordneten Spannelementen 146 und dem mittels der Spannelemente 146 eingespannten Werkstück 148. Ferner umfasst der Werkstückbearbeitungsbereich 162 die Fräs- und/oder Bohrvorrichtung 130.

Die zweite Kamera 102 erfasst ebenfalls den von der ersten Kamera 101 erfassten Werkstückbearbeitungsbereich 162. Die zweite Kamera 102 ist jedoch nicht senkrecht über dem Werkstückbearbeitungsbereich 162 angeordnet, sondern so ausgerichtet, dass ihre optische Achse gegenüber der ersten Kamera 101 um ungefähr 30° um eine Mittelachse 164, welche mittig zwischen den Führungsschienen 134 und parallel zu denselben verläuft, verdreht ist.

In der Umgebung der ersten Kamera 101 und der zweiten Kamera 102 ist eine Beleuchtungsvorrichtung 111 angeordnet. Die Beleuchtungsvorrichtung 111 umfasst eine Laservorrichtung zur Projektion eines Streifenmusters und ist so ausgerichtet, dass das Streifenmuster auf die in dem Werkstückbearbeitungsbereich 162 angeordneten Objekte projizierbar ist.

Die dritte Kamera 103 ist senkrecht über der zwischen den Führungsschienen 134 verlaufenden Mittelachse 164 angeordnet, und die optische Achse der dritten Kamera 103 verläuft in einer vertikalen Ebene, welche die Mittelachse 164 enthält, und ist gegenüber der Vertikalen um ungefähr 20° verdreht. Die dritte Kamera 103 ist, ausgehend von der Position der ersten Kamera 101, längs der Mittelachse 164 von der Fräs- und/oder Bohrvorrichtung beabstandet angeordnet, so dass die dritte Kamera 103 einen an dem von der Fräs- und/oder Bohrvorrichtung 130 entfernten Ende der Führungsschienen 134 auf dem Wechseltisch 137 angeordneten Werkstückwechselbereich 166 erfasst.

Die vierte Kamera 104 ist senkrecht über einer mittig zwischen den Führungsschienen 160 des Rüstplatzes 152 und parallel zu denselben verlaufenden Mittelachse 168 angeordnet. Ihre optische Achse verläuft in einer vertikalen Ebene, welche die Mittelachse 168 enthält, und ist gegenüber der Vertikalen um ungefähr 60° verdreht. Die vierte Kamera 104 ist längs der Mittelachse 168 so gegenüber dem Rüstplatz 152 versetzt, dass sie eine in der Rüstposition angeordnete Palette 136, einschließlich der an der Palette 136 angeordneten Werkstückaufnahmevorrichtung 120, der an der Werkstückaufnahmevorrichtung angeordneten Spannelemente 146 und des mittels der Spannelemente 146 an der Werkstückaufnahmevorrichtung 120 eingespannten Werkstücks 148, erfasst. Der von der vierten Kamera 104 erfasste Bereich ist der Rüstbereich 170.

Die fünfte Kamera 105 ist im Abstand von den an der Werkzeugträgervorrichtung 128 angeordneten Anzeigen 133 der Messvorrichtung 132 so angeordnet, dass ihre optische Achse in einer horizontalen Ebene und im wesentlichen senkrecht zu den Anzeigen 133 verläuft, so dass ein von der fünften Kamera 105 erfasster Bereich die zwei Anzeigen 133 der Messvorrichtung 132 umfasst.

Im Abstand von der Werkstückbearbeitungsvorrichtung 120 ist eine in Fig. 5 dargestellte Palettenlagervorrichtung 172 angeordnet. Die Palettenlagervorrichtung 172 ist als eine regalartige Vorrichtung mit mehreren, beispielsweise acht, Ablageflächen 174 ausgebildet, wobei jeweils zwei Ablageflächen 174 nebeneinander und jeweils vier Ablageflächen 174 übereinander angeordnet sind. Alle Ablageflächen 174 sind hinsichtlich ihrer horizontalen Ausdehnung etwas größer als eine Palette 136 ausgebildet. Die Ablageflächen 174 weisen der Führungseinrichtung 126 der Werkstückbearbeitungsvorrichtung 120 und der Führungseinrichtung 158 des Rüstplatzes 152 entsprechende Führungseinrichtungen 176 zum Aufsetzen einer Palette 136 auf. Die Führungseinrichtungen 176 umfassen somit jeweils zwei parallel zueinander verlaufende und im Abstand voneinander angeordnete Führungsschienen 178.

Eine Palette 136 ist in einer "Lagerposition" angeordnet, wenn sie auf den Führungsschienen 178 der bezüglich einer Vorderseite 184 der Palettenlagervorrichtung 172 oben rechts angeordneten Ablagefläche 174 der Palettenlagervorrichtung 172 angeordnet ist.

Die sechste Kamera 106 ist senkrecht über einer mittig zwischen den Führungsschienen 178 der bezüglich der Vorderseite 184 der Palettenlagervorrichtung 172 oben rechts angeordneten Ablagefläche 174 der Palettenlagervorrichtung 172 verlaufenden horizontalen Mittelachse 180 angeordnet, und ihre optische Achse verläuft in einer vertikalen Ebene, welche die Mittelachse 180 enthält, und ist gegenüber der Vertikalen um ungefähr 60° verdreht. Die sechste Kamera 106 ist längs der Mittelachse 180 so gegenüber der Lagerposition versetzt, dass sie eine in der Lagerposition angeordnete Palette 136 erfasst. Der von der sechsten Kamera 106 erfasste Bereich ist der Lagerbereich 182.

In einer (nicht dargestellten) Ausführungsform der Erfindung ist die sechste Kamera 106 derart verfahrbar, dass durch Verfahren der sechsten Kamera 106 jede Ablagefläche 174 der Palettenlagervorrichtung 172 erfassbar ist.

Die Überwachungsvorrichtung 100, die Maschinensteuerungsvorrichtung 118, die Werkstückbearbeitungsvorrichtung 120, der Rüstplatz 152 und die Palettenlagervorrichtung 172 bilden Bestandteile einer als Ganzes mit 186 bezeichneten Werkstückbearbeitungsanlage.

Die Bearbeitung eines Werkstücks 148 an der Werkstückbearbeitungsvorrichtung 120 erfolgt in folgenden Schritten:
a) Abnehmen einer Palette 136 und der an der Palette 136 angeordneten, zur Aufnahme eines zu bearbeitenden Werkstücks 148 geeigneten Werkstückaufnahmevorrichtung 140 von der Ablagefläche 174 der Palettenlagervorrichtung 172, die im mittels der sechsten Kamera 106 erfassten Lagerbereich 182 angeordnet ist;
b) Aufsetzen der Palette 136 mit der Werkstückaufnahmevorrichtung 140 auf die Führungsschienen 160 des Rüstplatzes 152 in dem Rüstbereich 170, welcher von der vierten Kamera 104 erfasst wird;
c) Festlegen von mehreren, beispielsweise vier, Spannelementen 146 relativ zu Sacklöchern 142 der Werkstückaufnahmevorrichtung 140;
d) Abnehmen der Palette 136 samt der Werkstückaufnahmevorrichtung 140 und der Spannelemente 146 von dem Rüstplatz 152 und Aufsetzen der Palette 136 auf die Führungseinrichtung 126 der Werkstückbearbeitungsvorrichtung 120 im von der dritten Kamera 103 erfassten Werkstückwechselbereich 166;
e) Einspannen eines Werkstücks 148 mittels der Spannelemente 146 an der im Werkstückwechselbereich 166 angeordneten Werkstückaufnahmevorrichtung 140;
f) Verfahren der Palette 136 samt der Werkstückaufnahmevorrichtung 140, der Spannelemente 146 und dem Werkstück 148 entlang der Führungseinrichtung 126 von dem Werkstückwechselbereich 166 in die Werkstückbearbeitungsposition im von der ersten Kamera 101 und der zweiten Kamera 102 erfassten und von der Beleuchtungsvorrichtung 111 beleuchteten Werkstückbearbeitungsbereich 162;
g) Bearbeiten des Werkstücks 148 mittels der Fräs- und/oder Bohreinrichtung 130 in der Werkstückbearbeitungsposition;
h) Verfahren der Palette 136 samt der Werkstückaufnahmevorrichtung 140, der Spannelemente 146 und dem Werkstück 148 entlang der Führungseinrichtung 126 von dem Werkstückbearbeitungsbereich 162 in die Werkstückwechselposition im von der dritten Kamera 103 erfassten Werkstückwechselbereich 166;
i) Lösen der Spannelemente 146 und Entfernen des bearbeiteten Werkstücks 148 von der im Werkstückwechselbereich 166 angeordneten Werkstückaufnahmevorrichtung 140;
j1) Einspannen eines neuen zu bearbeitenden Werkstücks 148 mittels der Spannelemente 146 an der Werkstückaufnahmevorrichtung 140 und Fortsetzung des Verfahrens mit Schritt f);
   oder
j2) Abnehmen der Palette 136 samt der Werkstückaufnahmevorrichtung 140 und der Spannelemente 146 von der Werkstückbearbeitungsvorrichtung 120 und Aufsetzen der Palette 136 auf die Führungseinrichtung 158 des Rüstplatzes 152 im von der vierten Kamera 104 erfassten Rüstbereich 170;
   Entfernen der Spannelemente 146 von der Werkstückaufnahmevorrichtung 140; und
   Abnehmen der Palette 136 samt der Werkstückaufnahmevorrichtung 140 von dem Rüstplatz 152 und Aufsetzen der Palette 136 samt der Werkstückaufnahmevorrichtung 140 auf die Führungseinrichtung 176 der Ablagefläche 174 der Palettenlagervorrichtung 172, die im mittels der sechsten Kamera 106 erfassten Lagerbereich 182 angeordnet ist.

Die Überwachungsvorrichtung 100 ermöglicht insbesondere folgende Überwachungsvorgänge während der genannten Verfahrensschritte:

Bereits vor dem Abnehmen einer Palette 136 und der an der Palette 136 angeordneten, zur Aufnahme eines zu bearbeitenden Werkstücks 148 geeigneten Werkstückaufnahmevorrichtung 140 von der im mittels der sechsten Kamera 106 erfassten Lagerbereich 182 befindlichen Ablagefläche 174 der Palettenlagervorrichtung 172 überwacht die sechste Kamera 106, welche Art von Palette 136 und Werkstückaufnahmevorrichtung 140 sich in dem von ihr erfassten Lagerbereich 182 befindet. Auf diese Weise können beispielsweise beschädigte Paletten 136 oder Paletten 136 des falschen Typs rechtzeitig ermittelt werden.

Nach dem Aufsetzen der Palette 136 mit der Werkstückaufnahmevorrichtung 140 auf die Führungsschienen 160 des Rüstplatzes 152 in dem Rüstbereich 170 und während und/oder nach dem Festlegen der Spannelemente 146 relativ zu den Sacklöchern 142 der Werkstückaufnahmevorrichtung 140 ist mittels der vierten Kamera 104 überwachbar, ob eine Palette 136 des richtigen Typs mit einer Werkstückaufnahmevorrichtung 140 des richtigen Typs auf die Führungsschienen 160 des Rüstplatzes 152 ordnungsgemäß aufgesetzt wurde und ob die Festlegung der Spannelemente 146 relativ zu den Sacklöchern 142 der Werkstückaufnahmevorrichtung 140 einer Vorgabe entsprechend erfolgt ist.

Nach der Abnahme der Palette 136 samt der Werkstückaufnahmevorrichtung 140 und der Spannelemente 146 von dem Rüstplatz 152 und dem Aufsetzen der Palette 136 auf die Führungseinrichtung 126 der Werkstückbearbeitungsvorrichtung 120 im von der dritten Kamera 103 erfassten Werkstückwechselbereich 166 ist überwachbar, ob ein Werkstück 148 der gewünschten Art in der gewünschten Position und Orientierung an der Werkstückaufnahmevorrichtung 140 eingespannt wird.

Mittels der fünften Kamera 105 ist nach dem Einspannen des Werkstücks 148 an der Werkstückaufnahmevorrichtung 140 überwachbar, ob der mittels der Messvorrichtung 132 ermittelte und an der Anzeige 133 der Messvorrichtung 132 angezeigte Spanndruck, der von den Spannelementen 146 auf das Werkstück 148 ausgeübt wird, einer Vorgabe entspricht.

Nach dem Verfahren der Palette 136 samt der Werkstückaufnahmevorrichtung 140, der Spannelemente 146 und dem Werkstück 148 entlang der Führungseinrichtung 126 in die Werkstückbearbeitungsposition im von der ersten Kamera 101 und der zweiten Kamera 102 erfassten und von der Beleuchtungsvorrichtung 111 beleuchteten Werkstückbearbeitungsbereich 162 ist mittels der ersten Kamera 101 und der zweiten Kamera 102 überwachbar, ob das an der Werkstückaufnahmevorrichtung 140 eingespannte Werkstück 148 bezüglich seiner Art, seiner Position und seiner Orientierung einer Vorgabe entspricht.

Nach dem Bearbeiten des Werkstücks 148 mittels der Fräs- und/oder Bohreinrichtung 130 in der Werkstückbearbeitungsposition ist mittels der ersten Kamera 101 und der zweiten Kamera 102 überwachbar, ob das an der Werkstückaufnahmevorrichtung 140 eingespannte und mittels der Fräs- und/oder Bohreinrichtung 130 bearbeitete Werkstück 148 bezüglich seiner Art, seiner Position und seiner Orientierung einer Vorgabe entspricht.

Nach dem Verfahren der Palette 136 samt der Werkstückaufnahmevorrichtung 140, der Spannelemente 146 und dem bearbeiteten Werkstück 148 entlang der Führungseinrichtung 126 von dem Werkstückbearbeitungsbereich 162 in die Werkstückwechselposition im von der dritten Kamera 103 erfassten Werkstückwechselbereich 166, dem Lösen der Spannelemente 146 und dem Entfernen des bearbeiteten Werkstücks 148 von der im Werkstückwechselbereich 166 angeordneten Werkstückaufnahmevorrichtung 140 ist mittels der dritten Kamera 103 überwachbar, ob die Palette 136, die Werkstückaufnahmevorrichtung 140 und/oder die Spannelemente 146 während des Bearbeitungsvorgangs mittels der Fräs- und/oder Bohrvorrichtung 130 beschädigt wurden.

Nach dem Einspannen eines neuen zu bearbeitenden Werkstücks 148 mittels der Spannelemente 146 an der Werkstückaufnahmevorrichtung 140 im Werkstückwechselbereich 166 ist mittels der dritten Kamera 103 überwachbar, ob das neu an der Werkstückaufnahmevorrichtung 140 eingespannte Werkstück 148 bezüglich seiner Art, Position und Orientierung einer Vorgabe entspricht. Nach der Abnahme der Palette 136 samt der Werkstückaufnahmevorrichtung 140 und der Spannelemente 146 von der Werkstückbearbeitungsvorrichtung 120 und dem Anordnen der Palette 136 auf der Führungseinrichtung 158 des Rüstplatzes 152 im von der vierten Kamera 104 erfassten Rüstbereich 170 und dem Entfernen der Spannelemente 146 von der Werkstückaufnahmevorrichtung 140 ist mittels der vierten Kamera 104 überwachbar, ob alle Spannelemente 146 ordnungsgemäß von der Werkstückaufnahmevorrichtung 140 entfernt wurden.

Nach dem Abnehmen der Palette 136 samt der Werkstückaufnahmevorrichtung 140 von dem Rüstplatz 152 und dem Aufsetzen der Palette 136 samt der Werkstückaufnahmevorrichtung 140 auf die Führungseinrichtung 176 der Ablagefläche 174 der Palettenlagervorrichtung 172, die im mittels der sechsten Kamera 106 erfassten Lagerbereich 182 angeordnet ist, ist mittels der sechsten Kamera 106 überwachbar, welche Art von Palette 136 und Werkstückaufnahmevorrichtung 140 sich in dem von ihr erfassten Lagerbereich 182 befindet.

Die Überwachung der genannten Prozessparameter erfolgt dabei durch eine Auswertung der von den genannten Kameras erzeugten Bilder in der jeweils zugeordneten Bildauswertungsvorrichtung 114 bzw. 116.

Einer ersten Art der Auswertung, welche anwendbar ist, wenn ein bestimmter Bereich der Werkstückbearbeitungsanlage 186 von mindestens zwei der Kameras 101, 102, 103, 104, 105 und 106 gleichzeitig erfasst wird, liegt das Triangulationsprinzip zugrunde:

Die erste Kamera 101 und die zweite Kamera 102 erzeugen Bilder der von der Beleuchtungsvorrichtung 111 beleuchteten, im Werkstückbearbeitungsbereich 162 der Werkstückbearbeitungsvorrichtung 120 angeordneten Palette 136 samt der Werkstückaufnahmevorrichtung 140, der Spannelemente 146 und dem Werkstück 148. Mittels der beiden Verbindungskabel 112 der Kameras 101 und 102 werden die die Bildinformationen enthaltenden Daten zu der gemeinsamen Bildauswertungsvorrichtung 114 übertragen. Da die erste Kamera 101 und die zweite Kamera 102 den Werkstückbearbeitungsbereich 162 aus unterschiedlichen Blickwinkeln erfassen, sind die von der ersten Kamera 101 und der zweiten Kamera 102 erzeugten Bilder des mittels der Beleuchtungsvorrichtung 111 projizierten Streifenmusters auf den im Werkstückbearbeitungsbereich 162 angeordneten Objekten unterschiedlich. Auf der Basis dieser Unterschiede generiert die Bildauswertungsvorrichtung 114 aus den Bildinformationen der mittels der ersten Kamera 101 und der zweiten Kamera 102 erzeugten Bilder ein dreidimensionales Modell der im Werkstückbearbeitungsbereich 162 angeordneten Palette 136 samt der Werkstückaufnahmevorrichtung 140, der Spannelemente 146 und dem Werkstück 148. Das so erhaltene dreidimensionale Modell wird anschließend entweder mit einem dreidimensionalen Modell eines als Referenz dienenden realen Musterteils oder mit einem dreidimensionalen CAD-Modell verglichen. In Abhängigkeit von den vorgegebenen Toleranzwerten erfolgt dann eine Beurteilung, ob die überwachte Palette 136, die Werkstückaufnahmevorrichtung 140, die Spannelemente 146 und das Werkstück 148 der Vorgabe entsprechen.

Eine weitere Art der Auswertung, welche auch anwendbar ist, wenn ein bestimmter Bereich der Werkstückbearbeitungsanlage 186 nur von einer der Kameras 101, 102, 103, 104, 105 und 106 erfasst wird, basiert auf einem direkten Vergleich von Istbildem mit Sollbildem:

Die mittels der dritten Kamera 103, der vierten Kamera 104 und der sechsten Kamera 106 durchgeführte Überwachung basiert auf dem Vergleich von mittels der dritten Kamera 103, der vierten Kamera 104 und der sechsten Kamera 106 erzeugten zweidimensionalen Istbildern mit mittels der dritten Kamera 103, der vierten Kamera 104 bzw. der sechsten Kamera 106 von einem als Referenz dienenden Musterteil erzeugten zweidimensionalen Sollbildern.

Die mittels der fünften Kamera 105 durchgeführte Überwachung basiert auf dem Vergleich von einem mittels der fünften Kamera 105 erzeugten zweidimensionalen Istbild der Anzeigen 133 der Messvorrichtung 132 mit einem mittels der fünften Kamera 105 von den Anzeigen 133 der Messvorrichtung 132 erzeugten zweidimensionalen Sollbild, wobei während der Erzeugung des zweidimensionalen Sollbildes ein als Musterteil dienendes Werkstück 148 so mittels der Spannelemente 146 an einer Werkstückaufnahmevorrichtung 140 eingespannt ist, dass die Anzeigen 133 der Messvorrichtung 132 einen einer Vorgabe entsprechenden Spanndruck anzeigen.

Die Sollbilder werden nach Ihrer Erzeugung in einer ihrer Auswertung dienenden Bildauswertungsvorrichtung, nämlich in der gemeinsamen Bildauswertungsvorrichtung 114 oder der der sechsten Kamera 106 zugeordneten Bildauswertungsvorrichtung 116, gespeichert.

Die Auswertung, das heißt die Durchführung des Vergleichs zwischen Sollbild und Istbild, erfolgt entweder, wie im Fall der von der sechsten Kamera 106 erzeugten Bilder, mittels der im Gehäuse der sechsten Kamera 106 angeordneten Bildauswertungsvorrichtung 116 oder aber, wie im Fall der dritten Kamera 103, der vierten Kamera 104 und der fünften Kamera 105, nach der Übertragung der die Bildinformationen enthaltenden Daten mittels der Verbindungskabel 112 zu der gemeinsamen Bildauswertungsvorrichtung 114 durch die gemeinsame Bildauswertungsvorrichtung 114.

Abweichungen der Istbilder von den entsprechenden Sollbildern werden beispielsweise dadurch ermittelt, dass Differenzen zwischen Helligkeitswerten einander entsprechender Stellen im Istbild und im Sollbild gebildet werden und geprüft wird, ob diese Differenzen einen vorgegebenen Toleranzwert überschreiten.

Nach der Auswertung wird von der gemeinsamen Bildauswertungsvorrichtung 114 und der Bildauswertungsvorrichtung 116 der sechsten Kamera 106 jeweils ein Signal mittels der Verbindungskabel 112 an die Maschinensteuerungsvorrichtung 118 übersandt, wobei den Signalen jeweils entnommen werden kann, ob mittels der Auswertung ein ordnungsgemäßer oder ein von einer Vorgabe abweichender Zustand ermittelt wurde.

Die Maschinensteuerungsvorrichtung 118 leitet anschließend im Falle der Ermittlung des ordnungsgemäßen Zustands ein Signal an die Werkstückbearbeitungsvorrichtung 120 weiter, das die Werkstückbearbeitungsvorrichtung 120 zur Bearbeitung eines Werkstücks 148 freischaltet.

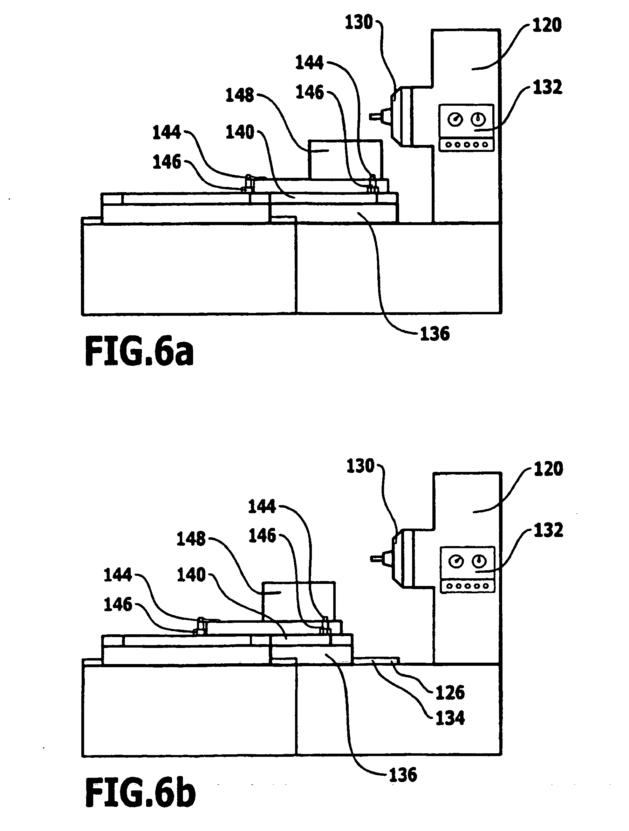

Beispiele für die mittels der Überwachungsvorrichtung 100 zu ermittelnden Zustände der Werkstückbearbeitungsanlage 186 sind den Fig. 6a bis 15b zu entnehmen.

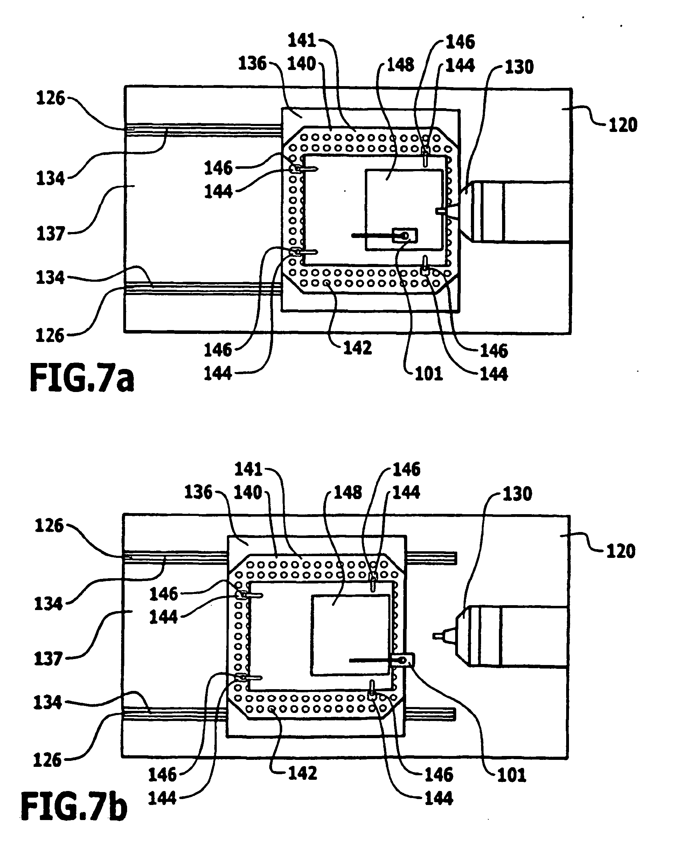

In den Fig. 6a und 7a ist die Sollposition einer Palette 136 mit der Werkstückaufnahmevorrichtung 140, den Spannelementen 146 und dem Werkstück 148 dargestellt. Mittels der ersten Kamera 101 und der zweiten Kamera 102 ist eine Abweichung in der Position der Palette 136 von deren Soll-Position ermittelbar. So ist in den Fig. 6b und 7b die Palette 136 zu weit entfernt von der Fräs- und/oder Bohrvorrichtung 130 angeordnet.

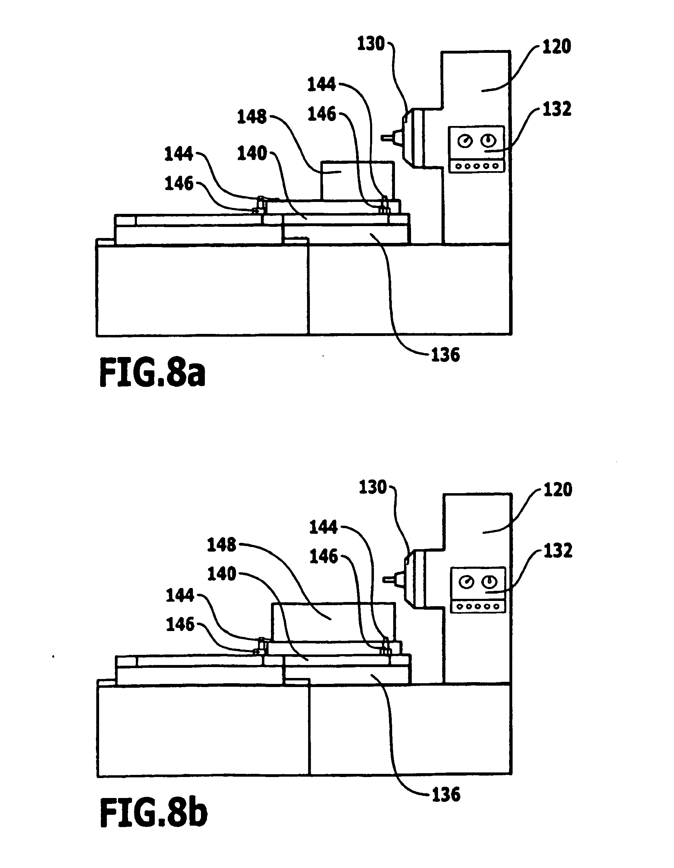

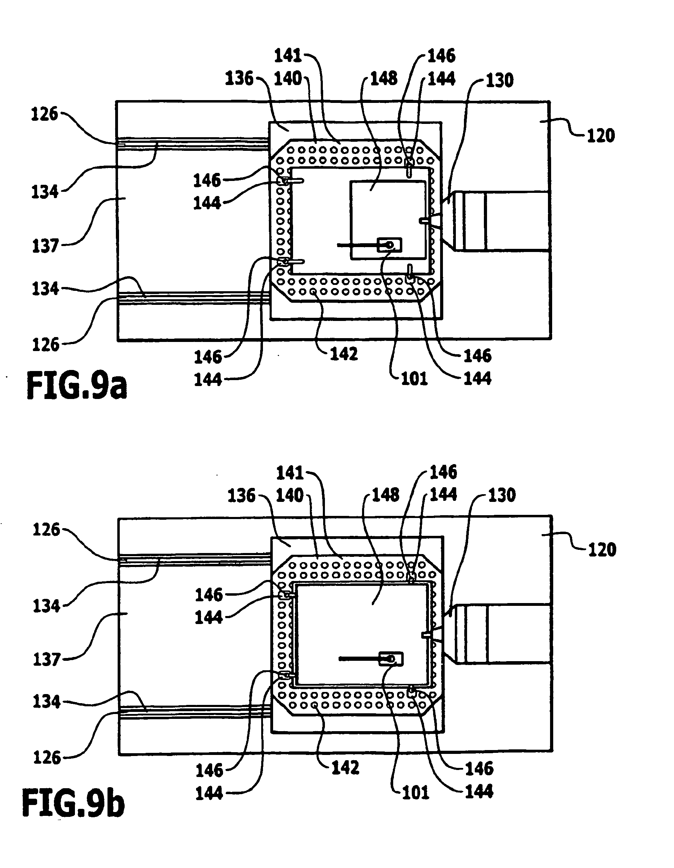

Die Fig. 8a und 9a zeigen Sollbilder eines zu bearbeitenden Werkstücks 148. Davon deutlich zu unterscheiden ist das in den Fig. 8b und 9b dargestellte Werkstück 148', welches eine andere Außenkontur aufweist. Mittels der Überwachungsvorrichtung 100 ist ermittelbar, ob das für die Bearbeitung an der Werkstückbearbeitungsvorrichtung 120 vorgesehene Werkstück 148 dem vorgegebenen Typ entspricht.

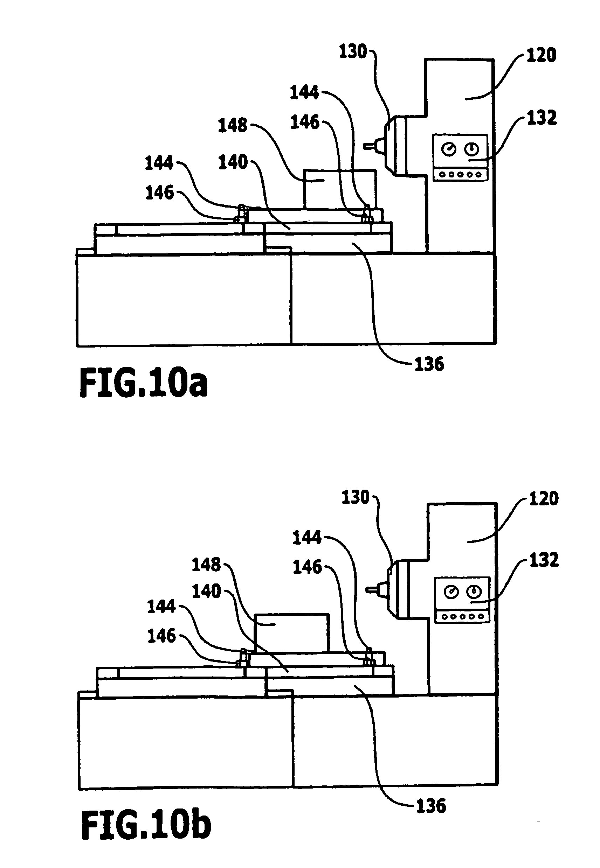

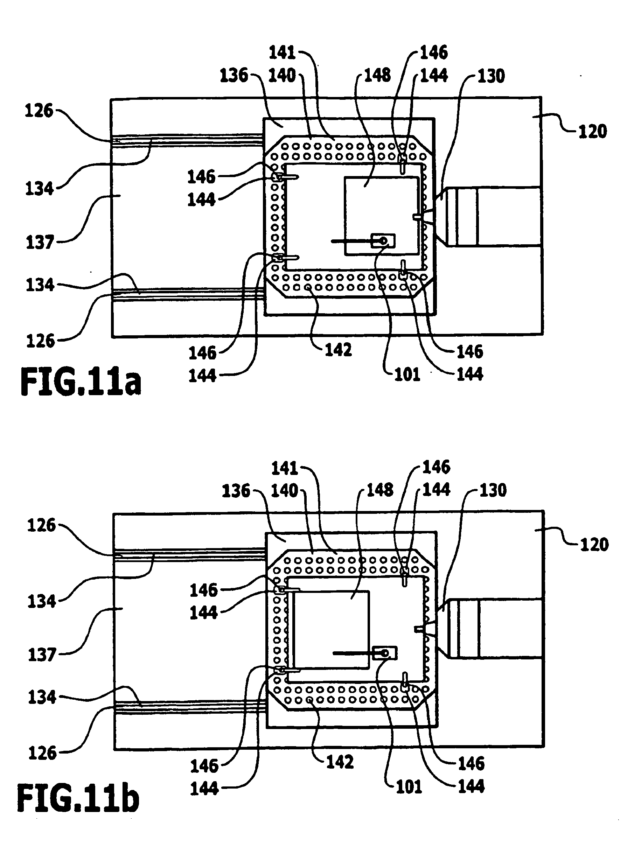

In den Fig. 10a und 11a ist ein richtig orientiertes Werkstück dargestellt. Wird das Werkstück hingegen, wie in den Fig. 10b und 11b dargestellt, um 180° um eine vertikale Achse gedreht an der Werkstückaufnahmevorrichtung 140 eingespannt, so ist mittels der Überwachungsvorrichtung 100 eine von der Vorgabe abweichende Außenkontur ermittelbar.

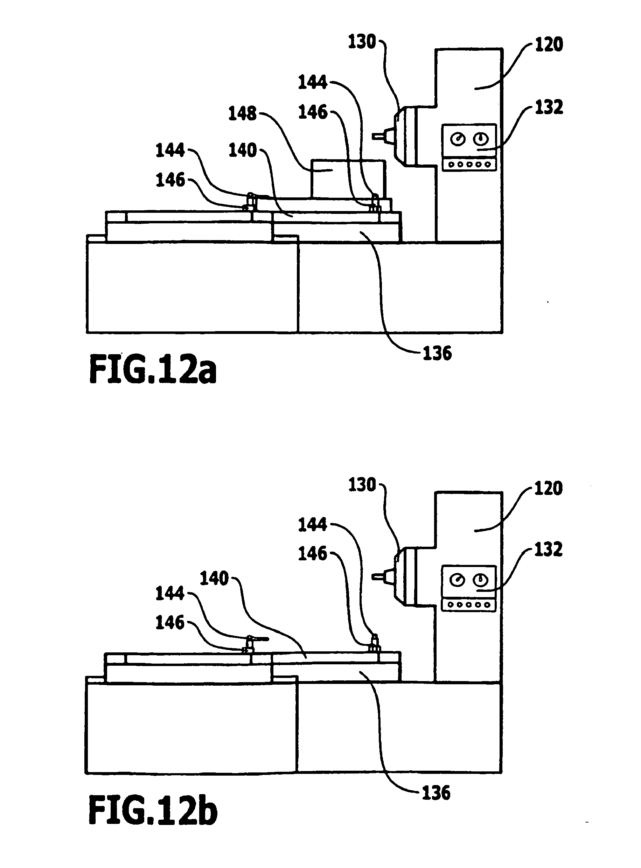

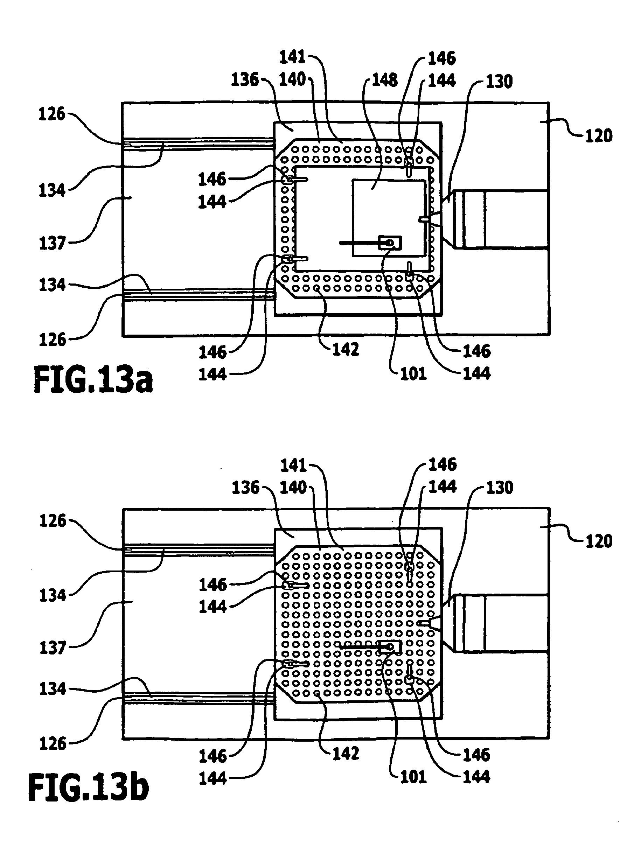

Die Fig. 12a und 13a zeigen eine Palette 136, eine Werkstückaufnahmevorrichtung 140, vier Spannelemente 146 und ein Werkstück 148, die jeweils in der Werkstückbearbeitungsposition im Werkstückbearbeitungsbereich 162 ordnungsgemäß angeordnet sind. Die in den Fig. 12b und 13b dargestellte Abweichung, dass kein Werkstück 148 an der Werkstückaufnahmevorrichtung 140 eingespannt ist, ist mittels der Überwachungsvorrichtung 100 ermittelbar.

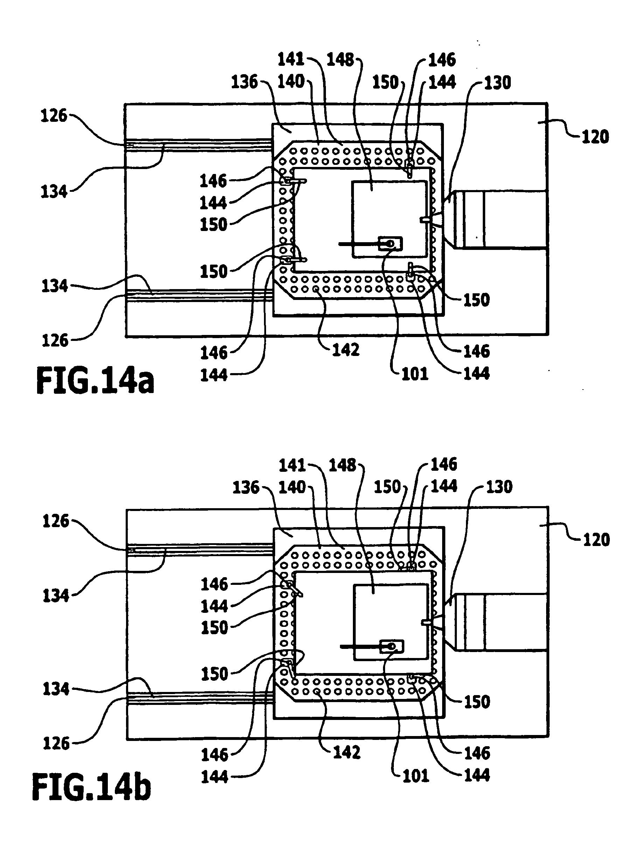

In Fig. 14a sind vier einer Vorgabe entsprechend angeordnete Spannelemente 146 dargestellt, wobei die oberhalb des Werkstücks 148 verlaufenden Teilbereiche 150 der Spannelemente 146 jeweils senkrecht zu dem von dem jeweiligen Spannelement 146 umgriffenen Randbereich des Werkstücks 148 angeordnet sind. Eine hiervon abweichende Orientierung der Teilbereiche 150 der Spannelemente 146 ist Fig. 14b zu entnehmen. Mittels der Überwachungsvorrichtung 100 ist ermittelbar, ob die Teilbereiche 150 der Spannelemente 146 eine einer Vorgabe entsprechende Orientierung aufweisen.

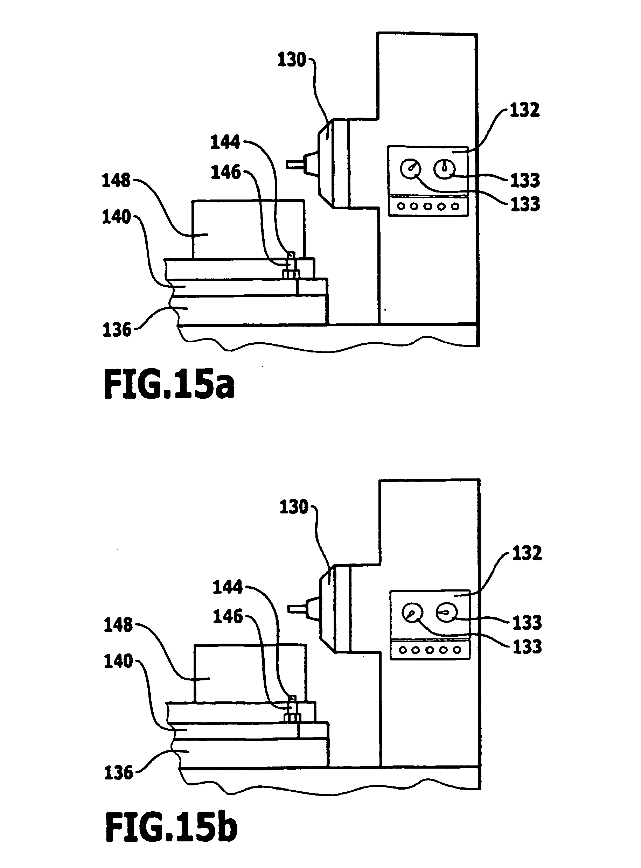

In den Fig. 15a und 15b sind die mittels der fünften Kamera 105 überwachten Anzeigen 133 der Messvorrichtung 132 dargestellt. In Fig. 15a zeigen die Anzeigen 133 der Messvorrichtung 132 einen ordnungsgemäßen Spanndruck an, welcher mittels der Spannelemente 146 auf ein an der Werkstückaufnahmevorrichtung 140 eingespanntes Werkstück 148 ausgeübt wird. Hiervon weicht der an den Anzeigen 133 der Messvorrichtung 132 angezeigte Spanndruck in Fig. 15b ab. Mittels der Überwachungsvorrichtung 100 ist überwachbar, ob der an den Anzeigen 133 der Messvorrichtung 132 angezeigte Spanndruck einer Vorgabe entspricht.

In einer alternativen Ausführungsform der Erfindung kann eine Überwachung eines Teilbereichs der Werkstückbearbeitungsanlage 186 beispielsweise mit nur einer Kamera erfolgen. Hierzu wird beispielsweise der Werkstückbearbeitungsbereich 162 der Werkstückbearbeitungsvorrichtung 120 in einer Seitenansicht so erfasst, wie er in den Fig. 6a, 6b, 8a, 8b, 10a, 10b, 12a und 12b dargestellt ist. Auf diese Weise ist vor der Freigabe der Bearbeitung des Werkstücks 148 mittels der Fräs- und/oder Bohrvorrichtung 130 bereits die Position, die Art und/oder die Orientierung des zu bearbeitenden Werkstücks 148 und/oder der mittels der Spannelemente 146 auf das Werkstück 148 ausgeübte Spanndruck ermittelbar.

Eine hierzu alternative Ausführungsform der Erfindung sieht die Anordnung nur einer Kamera derart vor, dass sie den Werkstückbearbeitungsbereich 162 der Werkstückbearbeitungsvorrichtung 120 in einer Draufsicht so erfasst, wie er in den Fig. 7a, 7b, 9a, 9b, 11a, 11b, 13a, 13b, 14a und 14b dargestellt ist. Auf diese Weise ist vor der Freigabe der Bearbeitung des Werkstücks 148 mittels der Fräs- und/oder Bohrvorrichtung 130 bereits die Position, die Art und/oder die Orientierung des zu bearbeitenden Werkstücks 148 und/oder die Orientierung der Spannteile 150 der Spannelemente 146 ermittelbar.

Eine Überwachung der Werkstückbearbeitungsanlage 186 mittels einer Überwachungsvorrichtung 100 gemäß den obigen Ausführungen ist im Vergleich zu einer Überwachung mittels elektronischer Sensoren einfacher, flexibler und kostengünstiger.

## Patentansprüche

1. Werkstückbearbeitungsanlage, umfassend
- mindestens eine Überwachungsvorrichtung (100) zur Überwachung der Orientierung mindestens einer Spannvorrichtung (144) zum Einspannen mindestens eines Werkstücks (148) an mindestens einer Werkstückaufnahmevorrichtung (140), welche auf einer Palette (136) angeordnet ist,
wobei die Überwachungsvorrichtung (100) mindestens eine Bilderzeugungsvorrichtung (101, 102, 103, 104, 105, 106) und mindestens eine Bildauswertungsvorrichtung (114, 116) umfasst, und
- mindestens eine Spannvorrichtung (144) zum Einspannen mindestens eines Werkstücks (148) an mindestens einer Werkstückaufnahmevorrichtung (140),
wobei mindestens ein Werkstück (148) zwischen mindestens ein das Werkstück (148) übergreifendes Spannteil (150) eines Spannelements (146) der Spannvorrichtung (144) und mindestens eine an der Werkstückaufnahmevorrichtung (140) angeordnete Auflagefläche (141) für das mindestens eine Werkstück (148) spannbar ist und mittels der Überwachungsvorrichtung (100) ermittelbar ist, ob das mindestens eine das Werkstück (148) übergreifende Spannteil (150) des Spannelements (146) der Spannvorrichtung (144) eine einer Vorgabe entsprechende Orientierung aufweist.

2. Werkstückbearbeitungsanlage nach Anspruch 1, **dadurch gekennzeichnet, dass** mindestens eine Bilderzeugungsvorrichtung (101, 102, 103, 104, 105, 106) beweglich ausgebildet ist.

3. Werkstückbearbeitungsanlage nach einem der Ansprüche 1 oder 2, **dadurch gekennzeichnet, dass** an mindestens einem Werkstück (148), an mindestens einer Werkstückaufnahmevorrichtung (140) und/oder an mindestens einer Spannvorrichtung (144) mindestens eine Detektionshilfe (149) zur Vereinfachung einer mittels mindestens einer Bildauswertungsvorrichtung (114, 116) durchgeführten Auswertung eines Bildes, welches mittels mindestens einer Bilderzeugungsvorrichtung (101, 102, 103, 104, 105, 106) von dem mindestens einen Werkstück (148), der mindestens einen Werkstückaufnahmevorrichtung (140) und/oder der mindestens einen Spannvorrichtung (144) erzeugt wird, angeordnet ist.

4. Werkstückbearbeitungsanlage nach einem der Ansprüche 1 bis 3, **dadurch gekennzeichnet, dass** mittels mindestens einer Bilderzeugungsvorrichtung (101, 102, 103, 104, 105, 106) mindestens ein Sollbild erzeugbar ist, welches mindestens ein Werkstück (148), mindestens eine Werkstückaufnahmevorrichtung (140) und/oder mindestens eine Spannvorrichtung (144) zeigt.

5. Werkstückbearbeitungsanlage nach Anspruch 4, **dadurch gekennzeichnet, dass** das mindestens eine Sollbild mindestens ein zumindest teilweise abgebildetes Objekt in seiner Sollart, Sollposition und/oder Sollorientierung zeigt, wobei mittels mindestens einer Bildauswertungsvorrichtung (114, 116) eine Bildauswertung durchführbar ist, bei der mindestens ein Sollbild mit mindestens einem Istbild verglichen wird.

6. Werkstückbearbeitungsanlage nach einem der Ansprüche 1 bis 5, **dadurch gekennzeichnet, dass** die Überwachungsvorrichtung (100) mindestens eine Messvorrichtung (132) zur Messung einer Größe aufweist, von der die durch mindestens eine Spannvorrichtung (144) auf mindestens ein Werkstück (148) ausgeübte Spannkraft abhängt.

7. Werkstückbearbeitungsanlage nach einem der Ansprüche 1 bis 6, **dadurch gekennzeichnet, dass** die Überwachungsvorrichtung (100) mindestens eine Bilderzeugungsvorrichtung (101, 102, 103, 104, 105, 106) aufweist, welche mindestens eine Anzeige (133) mindestens einer Messvorrichtung (132) erfasst.

8. Werkstückbearbeitungsanlage nach einem der Ansprüche 1 bis 7, **dadurch gekennzeichnet, dass** mittels mindestens einer Bildauswertungsvorrichtung (114, 116) eine auf dem Triangulationsprinzip beruhende Bildauswertung durchführbar ist, wobei mindestens zwei Bilderzeugungsvorrichtungen (101, 102, 103, 104, 105, 106) aus unterschiedlichen Blickwinkeln zwei einander überschneidende Bereiche (162, 166, 170, 182) erfassen, die mindestens ein Werkstück (148), mindestens eine Werkstückaufnahmevorrichtung (140) und/oder mindestens eine Spannvorrichtung (144) mit mindestens einem mittels mindestens einer Beleuchtungsvorrichtung (111) darauf projizierten Muster umfassen, wobei aus den erzeugten Bildern mittels mindestens einer Bildauswertungsvorrichtung (114, 116) ein Modell generiert wird, welches die dreidimensionale Struktur der erfassten Bereiche (162, 166, 170, 182), einschließlich des mindestens einen Werkstücks (148), der mindestens einen Werkstückaufnahmevorrichtung (140) und/oder der mindestens einen Spannvorrichtung (144), wiedergibt, und wobei das so generierte dreidimensionale Istmodell zur Ermittlung von Abweichungen mit einem dreidimensionalen Sollmodell verglichen wird.

9. Werkstückbearbeitungsanlage nach einem der Ansprüche 1 bis 8, **dadurch gekennzeichnet, dass** mindestens ein von mindestens einer Bilderzeugungsvorrichtung (101, 102, 103, 104, 105, 106) erfasster Bereich (162, 166, 170, 182) mindestens einen Wechseltisch (137), mindestens einen Rüstplatz (152) und/oder mindestens eine Palettenlagervorrichtung (172) zumindest teilweise umfasst.

10. Werkstückbearbeitungsanlage nach einem der Ansprüche 1 bis 9, **dadurch gekennzeichnet, dass** mindestens eine Werkstückaufnahmevorrichtung (140) an mindestens einer Führungseinrichtung (126, 158, 176) geführt verfahrbar ausgebildet ist.

11. Verfahren zur Überwachung der Orientierung mindestens einer Spannvorrichtung (144) zum Einspannen mindestens eines Werkstücks (148) an mindestens einer Werkstückaufnahmevorrichtung (140), welche auf einer Palette (136) angeordnet ist,
mit folgenden Verfahrensschritten:
- Erzeugung mindestens eines Bildes mittels mindestens einer Bilderzeugungsvorrichtung (101, 102, 103, 104, 105, 106);
- Auswertung des mindestens einen Bildes mittels mindestens einer Bildauswertungsvorrichtung (114, 116),
wobei mindestens ein Werkstück (148) zwischen mindestens ein das Werkstück (148) übergreifendes Spannteil (150) eines Spannelements (146) der Spannvorrichtung (144) und mindestens eine an der Werkstückaufnahmevorrichtung (140) angeordnete Auflagefläche (141) für das mindestens eine Werkstück (148) gespannt wird und mittels der Überwachungsvorrichtung (100) ermittelt wird, ob das mindestens eine das Werkstück übergreifende Spannteil (150) des Spannelements (146) der Spannvorrichtung (144) eine einer Vorgabe entsprechende Orientierung aufweist.

12. Verfahren nach Anspruch 11, **dadurch gekennzeichnet, dass** mittels mindestens einer Bildauswertungsvorrichtung (114, 116) mindestens eine auf dem Triangulationsprinzip beruhende Auswertung durchgeführt wird, wobei mindestens zwei Bilderzeugungsvorrichtungen (101, 102, 103, 104, 105, 106) aus unterschiedlichen Blickwinkeln mindestens je ein Bild zweier einander überschneidender Bereiche (162, 166, 170, 182) erzeugen, die mindestens ein Werkstück (148), mindestens eine Werkstückaufnahmevorrichtung (140) und/oder mindestens eine Spannvorrichtung (144) mit mindestens einem mittels mindestens einer Beleuchtungsvorrichtung (111) darauf projizierten Muster umfassen, wobei aus den erzeugten Bildern mittels mindestens einer Bildauswertungsvorrichtung (114, 116) ein Modell generiert wird, welches die dreidimensionale Struktur der erfassten Bereiche (162, 166, 170, 182), einschließlich des mindestens einen Werkstücks (148), der mindestens einen Werkstückaufnahmevorrichtung (140) und/oder der mindestens einen Spannvorrichtung (144), wiedergibt, und wobei das so generierte dreidimensionale Istmodell zur Ermittlung von Abweichungen mit einem dreidimensionalen Sollmodell verglichen wird.

## Claims

1. Workpiece machining installation, comprising
- at least one monitoring device (100) for monitoring the orientation of at least one clamping device (144) for clamping at least one workpiece (148) on at least one workpiece holding device (140) which is disposed on a pallet (136),
wherein the monitoring device (100) comprises at least one image generating device (101, 102, 103, 104, 105, 106) and at least one image evaluation device (114, 116),
and
- at least one clamping device (144) for clamping at least one workpiece (148) on at least one workpiece holding device (140),
wherein at least o4e workpiece (148) is clampable between at least one clamping part (150), which spans the workpiece (148), of a clamping element (146) of the clamping device (144) and at least one supporting surface (141) for the at least one workpiece (148) that is disposed on the workpiece holding device (140), and by means of the monitoring device (100) it can be determined whether the at least one clamping part (150), which spans the workpiece (148), of the clamping element (146) of the clamping device (144) has an orientation corresponding to a preset value.

2. Workpiece machining installation according to claim 1, **characterized in that** at least one image generating device (101, 102, 103, 104, 105, 106) is configured to be movable.

3. Workpiece machining installation according to one of claims t or 2, **characterized in that** disposed on at least one workpiece (148), on at least one workpiece holding device (140) and/or on at least one clamping device (144) is at least one detection aid (149) for simplifying an evaluation, which is carried out by means of at least one image evaluation device (114, 116), of an image of the at least one workpiece (148), of the at least one workpiece holding device (140) and/or of the at least one clamping device (144) that is generated by means of at least one image generating device (101, 102, 103, 104, 105, 106).

4. Workpiece machining installation according to one of claims 1 to 3, **characterized in that** by means of at least one image generating device (101, 102, 103, 104, 105, 106) at least one specified image can be generated, which shows at least one workpiece (148), at least one workpiece holding device (140) and/or at least one clamping device (144).

5. Workpiece machining installation according to claim 4, **characterized in that** the at least one specified image shows at least one at least partially imaged article in a specified style, specified position and/or specified orientation, wherein by means of at least one image evaluation device (114, 116) an image evaluation can be carried out, in which at least one specified image is compared to at least one actual image.

6. Workpiece machining installation according to one of claims 1 to 5, **characterized in that** the monitoring device (100) comprises at least one measuring device (132) for measuring a quantity, upon which the clamping force exerted by at least one clamping device (144) on at least one workpiece (148) depends.

7. Workpiece machining installation according to one of claims 1 to 6, **characterized in that** the monitoring device (100) comprises at least one image generating device (101, 102, 103, 104, 105, 106) that acquires at least one display (133) of at least one measuring device (132).

8. Workpiece machining installation according to one of claims 1 to 7, **characterized in that** by means of at least one image evaluation device (114, 116) an image evaluation based on the triangulation principle can be carried out, wherein at least two image generating devices (101, 102, 103, 104, 105, 106) from different viewing angles sense two mutually overlapping regions (162, 166, 170, 182), which comprise at least one workpiece (148), at least one workpiece holding device (140) and/or at least one clamping device (144) having at least one pattern projected thereon by means of at least one illumination device (111), wherein from the generated images by means of at least one image evaluation device (114, 116) a model is generated, which reproduces the three-dimensional structure of the sensed regions (162, 166, 170, 182), including the at least one workpiece (148), the at least one workpiece holding device (140) and/or the at least one clamping device (144), and wherein the three-dimensional actual model thus generated is compared with a three-dimensional specified model in order to determine variations.

9. Workpiece machining installation according to one of claims 1 to 8, **characterized in that** at least one region (162, 166, 170, 182) sensed by at least one image generating device (101, 102, 103, 104, 105, 106) at least partially comprises at least one changeover table (137), at least one set-up station (152) and/or at least one pallet storing device (172).

10. Workpiece machining installation according to one of claims 1 to 9, **characterized in that** at least one workpiece holding device (140) is formed on at least one guiding device (126, 158, 176) so as to be capable of guided travel.

11. Method of monitoring the orientation of at least one clamping device (144) for clamping at least one workpiece (148) on at least one workpiece holding device (140) which is disposed on a pallet (136), with the following method steps:
- generation of at least one image by means of at least one image generating device (101, 102, 103, 104, 105, 106);
- evaluation of the at least one image by means of at least one image evaluation device (114, 116),
wherein at least one workpiece (148) is clamped between at least one clamping part (150), which spans the workpiece (148), of a clamping element (146) of the clamping device (144) and at least one supporting surface (141) for the at least one workpiece (148) that is disposed on the workpiece holding device (140), and by means of the monitoring device (100) it is determined whether the at least one clamping part (150), which spans the workpiece (148), of the clamping element (146) of the clamping device (144) has an orientation corresponding to a preset value.

12. Method according to claim 11, **characterized in that** by means of at least one image evaluation device (114, 116) at least one evaluation based on the triangulation principle is carried out, wherein at least two image generating devices (101, 102, 103, 104, 105, 106) from different viewing angles each generate at least one image of two mutually overlapping regions (162, 166, 170, 182), which comprise at least one workpiece (148), at least one workpiece holding device (140) and/or at least one clamping device (144) having at least one pattern projected thereon by means of at least one illumination device (111), wherein from the generated images by means of at least one image evaluation device (114, 116) a model is generated, which reproduces the three-dimensional structure of the sensed regions (162, 166, 170, 182), including the at least one workpiece (148), the at least one workpiece holding device (140) and/or the at least one clamping device (144), and wherein the three-dimensional actual model thus generated is compared with a three-dimensional specified model in order to determine variations.

## Revendications

1. Installation d'usinage, comportant
- au moins un dispositif de contrôle (100) destiné à contrôler l'orientation d'au moins un dispositif de serrage (144) pour le serrage d'au moins une pièce à usiner (148) sur au moins un dispositif porte-pièce (140), lequel est agencé sur une palette (136),
ledit dispositif de contrôle (100) comprenant au moins un dispositif de production d'image (101, 102, 103, 104, 105, 106) et au moins un dispositif d'analyse d'image (114, 116), et
- au moins un dispositif de serrage (144) pour le serrage d'au moins une pièce à usiner (148) sur au moins un dispositif porte-pièce (140),
dans laquelle au moins une pièce à usiner (148) peut être montée entre au moins une partie de serrage (150), enserrant la pièce à usiner (148) par le dessus, d'un élément de serrage (146) du dispositif de serrage (144) et au moins une surface d'appui (141), agencée sur le dispositif porte-pièce (140), pour ladite au moins une pièce à usiner (148), et au moyen du dispositif de contrôle (100), il peut être déterminé si ladite au moins une partie de serrage (150), enserrant la pièce à usiner (148) par le dessus, de l'élément de serrage (146) du dispositif de serrage (144) possède une orientation correspondant à une orientation de consigne.

2. Installation d'usinage selon la revendication 1, **caractérisée en ce qu'**au moins un dispositif de production d'image (101, 102, 103, 104, 105, 106) est réalisé de manière mobile.

3. Installation d'usinage selon la revendication 1 ou 2, **caractérisée en ce que** sur au moins une pièce à usiner (148), sur au moins un dispositif porte-pièce (140) et/ou sur au moins un dispositif de serrage (144) est agencé au moins un auxiliaire de détection (149) pour simplifier une analyse d'une image, mise en oeuvre au moyen d'au moins un dispositif d'analyse d'image (114, 116), laquelle image de ladite au moins une pièce à usiner (148), dudit au moins un dispositif porte-pièce (140) et/ou dudit au moins dispositif de serrage (144) est générée au moyen d'au moins un dispositif de production d'image (101, 102, 103, 104, 105, 106).

4. Installation d'usinage selon l'une quelconque des revendications 1 à 3, **caractérisée en ce qu'**au moins une image théorique peut être générée par ledit au moins un dispositif de production d'image (101, 102, 103, 104, 105, 106), laquelle image théorique représente au moins une pièce à usiner (148), au moins un dispositif porte-pièce (140) et/ou au moins un dispositif de serrage (144).

5. Installation d'usinage selon la revendication 4, **caractérisée en ce que** ladite au moins une image théorique d'au moins un objet, reproduit au moins en partie, est représentée dans son type théorique, sa position théorique et/ou son orientation théorique, sachant qu'au moyen d'au moins un dispositif d'analyse d'image (114, 116) peut être effectuée une analyse d'image, au cours de laquelle au moins une image théorique est comparée à au moins une image réelle.

6. Installation d'usinage selon l'une quelconque des revendications 1 à 5, **caractérisée en ce que** le dispositif de contrôle (100) comporte au moins un dispositif de mesure (132) destiné à mesurer une grandeur de laquelle dépend la force de serrage exercée par au moins un dispositif de serrage (144) sur au moins une pièce à usiner (148).

7. Installation d'usinage selon l'une quelconque des revendications 1 à 6, **caractérisée en ce que** le dispositif de contrôle (100) comporte au moins un dispositif de production d'image (101, 102, 103, 104, 105, 106) qui enregistre au moins un affichage (133) d'au moins un dispositif de mesure (132).

8. Installation d'usinage selon l'une quelconque des revendications 1 à 7, **caractérisée en ce qu'**une analyse d'image, basée sur le principe de triangulation, peut être effectuée par au moins un dispositif d'analyse d'image (114, 116), sachant qu'au moins deux dispositifs de production d'image (101, 102, 103, 104, 105, 106) enregistrent à partir de différents angles de vue deux zones (162, 166, 170, 182) se coupant l'une l'autre, lesquelles comprennent au moins une pièce à usiner (148), au moins un dispositif porte-pièce (140) et/ou au moins un dispositif de serrage (144) avec au moins un modèle projeté sur ceux-ci au moyen d'au moins un dispositif d'éclairage (111), au moins un modèle étant généré à partir des images produites au moyen d'au moins un dispositif d'analyse d'image (114, 116), lequel modèle reproduit la structure tridimensionnelle des zones (162, 166, 170, 182) enregistrées, y compris ladite au moins une pièce à usiner (148), ledit au moins un dispositif porte-pièce (140) et/ou ledit au moins un dispositif de serrage (144), et le modèle réel tridimensionnel ainsi généré étant comparé à un modèle théorique tridimensionnel en vue de détecter des divergences.

9. Installation d'usinage selon l'une quelconque des revendications 1 à 8, **caractérisée en ce qu'**au moins une zone (162, 166, 170, 182), enregistrée par au moins un dispositif de production d'image (101, 102, 103, 104, 105, 106), comprend au moins en partie au moins une table amovible (137), au moins un poste d'équipement (152) et/ou au moins un dispositif de stockage de palettes (172).

10. Installation d'usinage selon l'une quelconque des revendications 1 à 9, **caractérisée en ce qu'**au moins un dispositif porte-pièce (140) est réalisé de manière mobile sur au moins un dispositif de guidage (126, 158, 176).

11. Procédé pour le contrôle de l'orientation d'au moins un dispositif de serrage (144) pour le serrage d'au moins une pièce à usiner (148) sur au moins un dispositif porte-pièce (140), lequel est agencé sur une palette (136),
avec les étapes suivantes :
- production d'au moins une image au moyen d'au moins un dispositif de production d'image (101, 102, 103, 104, 105, 106) ;
- analyse de ladite au moins une image au moyen d'au moins un dispositif d'analyse d'image (114, 116),
dans lequel procédé au moins une pièce à usiner (148) est montée entre au moins une partie de serrage (150), enserrant la pièce (148) par le dessus, d'un élément de serrage (146) du dispositif de serrage (144) et au moins une surface d'appui (141), agencée sur le dispositif porte-pièce (140), pour ladite au moins une pièce à usiner (148), et au moyen du dispositif de contrôle (100), il peut être déterminé si ladite au moins une partie de serrage (150), enserrant la pièce (148) par le dessus, de l'élément de serrage (146) du dispositif de serrage (144) possède une orientation correspondant à une orientation de consigne.

12. Procédé selon la revendication 11, **caractérisé en ce qu'**au moins une analyse, basée sur le principe de triangulation, est effectuée par au moins un dispositif d'analyse d'image (114, 116), sachant qu'au moins deux dispositifs de production d'image (101, 102, 103, 104, 105, 106) enregistrent à partir de différents angles de vue au moins chacun une image de deux zones (162, 166, 170, 182) se coupant l'une l'autre, lesquelles comprennent au moins une pièce à usiner (148), au moins un dispositif porte-pièce (140) et/ou au moins un dispositif de serrage (144) avec au moins un modèle projeté sur ceux-ci au moyen d'au moins un dispositif d'éclairage (111), au moins un modèle étant généré à partir des images produites au moyen d'au moins un dispositif d'analyse d'image (114, 116), lequel modèle reproduit la structure tridimensionnelle des zones (162, 166, 170, 182) enregistrées, y compris ladite au moins une pièce à usiner (148), ledit au moins un dispositif porte-pièce (140) et/ou ledit au moins un dispositif de serrage (144), et le modèle réel tridimensionnel ainsi généré étant comparé à un modèle théorique tridimensionnel en vue de détecter des divergences.
